# EUROPÄISCHE PATENTSCHRIFT

(11) **EP 4 015 562 B1**
(45) Veröffentlichungstag und Bekanntmachung des Hinweises auf die Patenterteilung: **28.10.2026**
(21) Anmeldenummer: 20215165.0
(22) Anmeldetag: 17.12.2020
(51) Int. Cl.: C08G 69/26, C08L 77/06

(54) **POLYAMID-FORMMASSEN, HIERAUS HERGESTELLTE FORMKÖRPER UND VERWENDUNG DER POLYAMID-FORMMASSEN**
POLYAMIDE MOULDING MATERIALS, MOULDINGS PRODUCED THEREFROM AND USE OF THE POLYAMIDE MOULDING MATERIALS
MATIÈRES DE MOULAGE POLYAMIDE, CORPS MOULÉ FABRIQUÉ À PARTIR DE CELLES-CI ET UTILISATION DE MATIÈRES DE MOULAGE POLYAMIDE

(43) Veröffentlichungstag der Anmeldung: 22.06.2022
(73) Patentinhaber: EMS-CHEMIE AG, 7013 Domat/Ems (CH)
(72) Erfinder: ALKAN, Arda, 7013 Domat/Ems (CH); CADALBERT, Andri, 7402 Bonaduz (CH); BAYER, Andreas, 7013 Domat/Ems (CH); HOFFMANN, Botho, 7013 Domat/Ems (CH)
(74) Vertreter: Pfenning, Meinig & Partner mbB

(56) Entgegenhaltungen:
- CN-A- 109 777 097
- US-A- 3 766 131

## Beschreibung

Die vorliegende Erfindung betrifft Polyamid-Formmassen mit hoher Wärmealterungsbeständigkeit, welche neben einem spezifischen Polyamid mindestens ein unsubstituiertes oder substituiertes Metallocen, gegebenenfalls mindestens einen Schlagzähmodifikator und gegebenenfalls mindestens einen Zusatzstoff enthalten. Ebenso betrifft die Erfindung die Verwendung dieser Polyamid-Formmassen zur Herstellung von Formkörpern.

Polyamide können als Werkstoffe für Formkörper eingesetzt werden, die während ihrer Lebensdauer erhöhten Temperaturen ausgesetzt sind. Die Verbesserung der Wärmealterungsbeständigkeit von Polyamiden ist überaus wünschenswert, da dadurch längere Lebenszeiten für thermisch belastete Bauteile erreicht werden können bzw. deren Ausfallrisiko gesenkt werden kann. Alternativ kann eine verbesserte Wärmealterungsbeständigkeit auch den Einsatz der Bauteile bei höheren Temperaturen ermöglichen.

Thermoplastische Polyamide können als Konstruktionswerkstoffe für Bauteile eingesetzt werden, die während ihrer Lebensdauer erhöhten Temperaturen ausgesetzt sind. Da es hierbei zu thermooxidativen Schädigungen kommt, werden Wärmestabilisatoren eingesetzt, die das Auftreten der thermooxidativen Schädigung hinauszögern.

Langzeitwärmestabilisierte Polyamid-Formmassen sind aus der EP 2 535 365 A1 bekannt, worin Formmassen auf Basis eines teilaromatischen Polyamids und Caprolactam gearbeitet werden, die mit Kupferstabilisatoren bzw. mit Mischungen aus Kupfer- und organischen Stabilisatoren versehen sind.

Auch die EP 2 902 444 A1 betrifft langzeitwärmestabilisierte Formmassen auf Basis eines teilaromatischen Polyamids und Caprolactam. Die Langzeitwärmestabilisierung wird hier durch die Verwendung von organischen Stabilisatoren erreicht.

Ebenso beschreibt die EP 1 681 313 A1 langzeitwärmestabilisierte Formmassen. Die Langzeitwärmestabilisierung wird hier durch die Verwendung von mindestens zwei speziellen Wärmestabilisatoren (z.B. Kupferiodid und Eisenoxid) und durch Einsatz von zwei Polyamiden, die sich im Schmelzpunkt um zumindest 20 °C unterscheiden, erreicht.

Die US 3,766,131 beschreibt Glasfaser-verstärkte thermoplastische Zusammensetzungen, in denen Metalloxene als Kopplungsmittel für die Glasfasern eingesetzt wird.

Die CN 109 777 097 A beschreibt flammgeschützte Polyamid-Formmassen mit geringer Neigung zur Rauchbildung. Hierin wird Ferroxen als Rauchunterdrücker eingesetzt.

Ausgehend hiervon war es Aufgabe der vorliegenden Erfindung, Polyamid-Formmassen zur Verfügung zu stellen, aus denen bevorzugt Formkörper hergestellt werden können, die sich insbesondere gegenüber aus dem Stand der Technik bekannten Polyamid-Formmassen durch eine verbesserte Wärmealterungsbeständigkeit auszeichnen.

Diese Aufgabe wird durch die Polyamid-Formmasse mit den Merkmalen des Anspruchs 1 und die Formkörper mit den Merkmalen des Anspruchs 13 gelöst.

Die weiteren abhängigen Ansprüche zeigen vorteilhafte Weiterbildungen auf. In Anspruch 14 werden erfindungsgemäße Verwendungen angegeben.

Erfindungsgemäß wird eine Polyamid-Formmasse enthaltend oder bestehend aus den folgenden Komponenten (A) bis (D) bereitgestellt:
(A) 32 bis 99,99 Gew.-% mindestens ein teilkristallines, teilaromatisches Polyamid, wobei das mindestens eine teilkristalline, teilaromatische Polyamid (A) gebildet ist aus den Monomeren (a1) bis (a2) und gegebenenfalls (a3)und gegebenenfalls (a4):
   (a1) mindestens eines Diamins, ausgewählt aus der Gruppe bestehend aus 1,4-Butandiamin, 1,5-Pentandiamin, 1,6-Hexandiamin, 1,8-Octandiamin, 1,9-Nonandiamin, 1,10-Decan-diamin, 1,12-Dodecandiamin, 2-Methyl-1,5-Pentandiamin, 2-Methyl-1,8-octandiamin, Bis(4-amino-cyclohexyl)methan, Bis(4-amino-3-methyl-cyclohexyl)methan, Bis(4-amino-3,5-dimethyl-cyclohexyl)methan, Bis(aminomethyl)cyclohexan, Isophorondiamin, m-Xylylendiamin und p-Xylylendiamin, und
   (a2) mindestens einer aromatischen Dicarbonsäure, ausgewählt aus der Gruppe bestehend aus Terephthalsäure, Isophthalsäure und Naphthalindicarbonsäure, und gegebenenfalls
   (a3) mindestens einer Dicarbonsäure, ausgewählt aus der Gruppe bestehend aus 1,6-Hexandisäure, 1,9-Nonandisäure, 1,10-Decandisäure, 1,12-Dodecandisäure, 1,13-Tridecan-disäure, 1,14-Tetradecandisäure, 1,15-Pentadecansäure, 1,16-Hexadecandisäure, 1,17-Heptadecandisäure, 1,18-Octadecandisäure, Cyclohexandicarbonsäure und dimere Fettsäure mit 36 oder 44 C-Atomen, und gegebenfalls
   (a4) einem oder mehreren Lactamen oder ω-Aminosäuren, ausgewählt aus der Gruppe bestehend aus Lactam-6, Lactam-11, Lactam-12, 1,6-Aminohexansäure, 1,11-Aminoundecansäure und 1,12-Aminododecansäure.
(B) 0 bis 30 Gew.-% mindestens einen funktionalisierten Schlagzähmodifikator,
(C) 0,01 bis 3,0 Gew.-% mindestens ein unsubstituiertes oder substituiertes Metallocen,
(D) 0 bis 35 Gew.-% mindestens einen Zusatzstoff,
   wobei sich die Komponenten (A) bis (D) auf 100 Gew.-% ergänzen.

Überraschenderweise konnte festgestellt werden, dass durch den Einsatz von Metallocenen, insbesondere Ferrocenen in Verbindung mit dem oder den mindestens einen teilkristallinen, teilaromatischen Polyamid eine signifikant verbesserte Wärmealterungsbeständigkeit erzielt werden kann.

Die ferrocenhaltigen, erfindungsgemässen Polyamid-Formmassen zeigen eine deutlich verbesserte Fließfähigkeit im Spiralfließtest.

### Begriffsdefinitionen

### • Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 16396-1 (2015, (D)) festgelegten. Die darin verwendeten Abkürzungen werden im Folgenden synonym zu den IUPAC Namen der Monomere verwendet. Insbesondere kommen folgende Abkürzungen für Monomere in der vorliegenden Anmeldung vor: 6 für 1,6-Hexandiamin (CAS-Nr. 124-09-4), T für Terephthalsäure (CAS-Nr. 100-21-0), I für Isophthalsäure (CAS-Nr. 121-95-5), 6 für 1,6-Hexandisäure (CAS-Nr. 124-04-9), 6 für Caprolactam (CAS-Nr. 105-60-2), MACM für Bis(4-amino-3-methyl-cyclohexyl)methan (auch als 3,3'-Dimethyl-4,4'-diaminodicyclohexylmethan bezeichnet, CAS-Nr. 6864-37-5), TMDC für Bis(4-amino-3,5-dimethyl-cyclohexyl)methan (auch als 3,3',5,5'-Tetramethyl-4,4'-diaminodicyclohexylmethan bezeichnet, CAS-Nr. 65962-45-0), PACM für Bis(4-amino-cyclohexyl)methan (auch als 4,4'-Diaminodicyclohexylmethan bezeichnet, CAS-Nr. 1761-71-3), BAC für 1,3-Bis(aminomethyl)-cyclohexan (auch als 1,3-Cyclohexandimethanamin bezeichnet, CAS-Nr. 2579-20-6) und für 1,4-Bis(aminomethyl)-cyclohexan (auch als 1,4-Cyclohexandimethanamin bezeichnet, CAS-Nr. 2549-93-1) und für deren Mischungen, IPD für Isophorondiamin (auch als 3-(Aminomethyl)-3,5,5-trimethylcyclohexanamin, 1-Amino-3-aminomethyl-3,5,5-trimethylcyclohexan oder Cyclohexanmethanamin,5-amino-1,3,5,5-trimethyl- bezeichnet, CAS-Nr. 2855-13-2), MPMD für 2-Methyl-1,5-Pentandiamin (auch als 1,5-Diamino-2-methylpentan bezeichnet, CAS-Nr. 15520-10-2), MOD für 2-Methyl-1,8-octandiamin (auch als 2-Methyloctane-1,8-diamine bezeichnet, CAS-Nr. 148528-05-6), 12 für Dodecandisäure (auch als 1,10-Decandicarbonsäure bezeichnet, CAS-Nr. 693-23-2), CHD für Cyclohexandicarbonsäure, 12 für Lactam-12 (auch als Laurinlactam bezeichnet, CAS-Nr. 947-04-6).

### • Allgemeines zu den Zusammensetzungen

Die Begriffe "enthaltend" und "umfassend" in den vorliegenden Ansprüchen und in der Beschreibung bedeuten, dass weitere Komponenten nicht ausgeschlossen sind. Im Rahmen vorliegender Erfindung ist der Begriff "bestehend aus" als bevorzugte Ausführungsform der Begriffe "enthaltend" oder "umfassend" zu verstehen. Wenn definiert wird, dass ein Gruppe mindestens eine bestimmte Anzahl von Komponenten "enthält" oder diese "umfasst", ist dies auch so zu verstehen, dass eine Gruppe offenbart wird, die vorzugsweise aus diesen Komponenten "besteht".

### • Mengenangaben der Monomere

Enthalten die Polyamide (A1) nur Disäuren und Diamine so ergänzen sich deren molare Anteile auf 50 Mol-% für die Summe alle Diamine und 50 Mol-% für die Summe alle Disäuren und die Summe der Diamin- und Disäure-Anteile ergibt 100 Mol-% für das Polyamid.

Enthalten die Polyamide (A1) oder (A2) neben Disäuren und Diaminen auch Lactame oder ω-Aminosäuren zu x Mol-%, so beträgt die Summe aller Diamine nur noch (50 - 0,5 x) Mol-% und Summe aller Disäuren (50 - 0,5 x) Mol-%, bezogen auf 100 Mol-% Polyamid.

Bei den Mengenangaben zu den Disäuren und Diaminen der Polyamide gilt immer, dass die Summe der molaren Anteile aller Diamine gleich der Summe der molaren Anteile aller Disäuren ist.

### • Allgemeines zu den Mengenangaben

Die Polyamid-Formmassen gemäß der vorliegenden Erfindung enthalten oder bestehen aus den Komponenten (A) und (C) sowie gegebenenfalls (B) und/oder (D), es gilt dabei die Maßgabe, dass sich die Komponenten (A), (B), (C) und (D) in Summe auf 100 Gew.-% ergänzen. Die festgelegten Bereiche der Mengenangaben für die einzelnen Komponenten (A), (B), (C) und (D) sind so zu verstehen, dass innerhalb der vorgegebenen Bereiche eine willkürliche Menge für jede der Einzelkomponenten ausgewählt werden kann, sofern die Maßgabe erfüllt wird, dass die Summe aller Komponenten (A), (B), (C) und (D) 100 Gew.-% ergibt.

### • Teilkristalline, teilaromatische Polyamide

Im Sinne der vorliegenden Erfindung sind teilaromatische Polyamide solche Polyamide die mindestens ein aromatisches Monomer enthalten. Bevorzugt ist dieses mindestens eine aromatische Monomer eine Dicarbonsäure. Im Sinne der vorliegenden Erfindung handelt es sich bei Metaxylylendiamin (MXD, CAS-Nr. 1477-55-0) und Paraxylylendiamin (PXD, CAS-Nr. 539-48-0) nicht um aromatische Monomere. Dies gilt auch für alle anderen Monomere, bei denen die Amino- bzw. Carboxygruppen nicht direkt am aromatischen Ring hängen. Die teilkristallinen, teilaromatischen Polyamide der vorliegenden Erfindung besitzen eine Schmelztemperatur und eine Schmelzwärme, welche mit der dynamischen Differenz-Kalorimetrie (engl. Differential Scanning Calorimetry, DSC) nach ISO 11357-3 (2013) bestimmt werden können.

### • Metallocene

Bei den Metallocenen handelt es sich um Koordinationsverbindungen und zwar um Komplexe, sogenannte Sandwich-Komplexe. Es handelt sich daher weder um ein Metalloxid noch um ein Metallsalz.

Ein Vertreter ist beispielsweise unsubstituiertes oder substituiertes Bis(η⁵-cyclopentadienyl)eisen. Bis(η⁵-cyclopentadienyl)eisen wird auch als Ferrocen bezeichnet (CAS-Nr. 102-54-5). Beide Bezeichnungen werden in dieser Anmeldung synonym verwendet.

### • Wärmealterungsbeständigkeit

Eine gute Wärmealterungsbeständigkeit zeigt sich in der Verlangsamung des Abfalls der Reissfestigkeit und/oder der Reissdehnung nach Lagerung des Formkörpers bei erhöhten Temperaturen, d.h. Temperaturen von mindestens 100 °C, bevorzugt mindestens 120 °C, besonders bevorzugt mindestens 140 °C.

### Polyamid-Formmasse

Die erfindungsgemäße Polyamid-Formmasse enthält die Komponenten (A), (C) sowie gegebenenfalls (B) und/oder (D) oder besteht aus diesen.

Die erfindungsgemässe Polyamid-Formmasse, enthält die folgenden Komponenten oder besteht daraus:
(A) 32 bis 99,99 Gew.-% mindestens ein teilkristallines, teilaromatisches Polyamid, wobei das mindestens eine teilkristalline, teilaromatische Polyamid (A) gebildet ist aus den Monomeren (a1) bis (a2) und gegebenenfalls (a3)und gegebenenfalls (a4):
   (a1) mindestens eines Diamins, ausgewählt aus der Gruppe bestehend aus 1,4-Butandiamin, 1,5-Pentandiamin, 1,6-Hexandiamin, 1,8-Octandiamin, 1,9-Nonandiamin, 1,10-Decan-diamin, 1,12-Dodecandiamin, 2-Methyl-1,5-Pentandiamin, 2-Methyl-1,8-octandiamin, Bis(4-amino-cyclohexyl)methan, Bis(4-amino-3-methyl-cyclohexyl)methan, Bis(4-amino-3,5-dimethyl-cyclohexyl)methan, Bis(aminomethyl)cyclohexan, Isophorondiamin, m-Xylylendiamin und p-Xylylendiamin, und
   (a2) mindestens einer aromatischen Dicarbonsäure, ausgewählt aus der Gruppe bestehend aus Terephthalsäure, Isophthalsäure und Naphthalindicarbonsäure, und gegebenenfalls
   (a3) mindestens einer Dicarbonsäure, ausgewählt aus der Gruppe bestehend aus 1,6-Hexandisäure, 1,9-Nonandisäure, 1,10-Decandisäure, 1,12-Dodecandisäure, 1,13-Tridecan-disäure, 1,14-Tetradecandisäure, 1,15-Pentadecansäure, 1,16-Hexadecandisäure, 1,17-Heptadecandisäure, 1,18-Octadecandisäure, Cyclohexandicarbonsäure und dimere Fettsäure mit 36 oder 44 C-Atomen, und gegebenfalls
   (a4) einem oder mehreren Lactamen oder ω-Aminosäuren, ausgewählt aus der Gruppe bestehend aus Lactam-6, Lactam-11, Lactam-12, 1,6-Aminohexansäure, 1,11-Aminoundecansäure und 1,12-Aminododecansäure.
(B) 0 bis 30 Gew.-% mindestens einen funktionalisierten Schlagzähmodifikator,
(C) 0,01 bis 3,0 Gew.-% mindestens ein unsubstituiertes oder substituiertes Metallocen,
(D) 0 bis 35 Gew.-% mindestens einen Zusatzstoff,
   wobei sich die Komponenten (A) bis (D) auf 100 Gew.-% ergänzen.

Der Anteil von Komponente (A) in der Polyamid-Formmasse liegt bevorzugt im Bereich von 43 bis 94,87 Gew.-%, besonders bevorzugt im Bereich von53,5 bis 89,6 Gew.-%, bezogen auf das Gesamtgewicht der Polyamid-Formmasse.

Der Anteil von Komponente (B) in der Polyamid-Formmasse liegt bevorzugt im Bereich von 5 bis 25 Gew.-%, besonders bevorzugt im Bereich von 10 bis 20 Gew.-%, bezogen auf das Gesamtgewicht der Polyamid-Formmasse.

Der Anteil von Komponente (C) in der Formmasse liegt bevorzugt im Bereich von 0,03 bis 2,0 Gew.-%, besonders bevorzugt von 0,1 bis 1,5 Gew.-%, bezogen auf das Gesamtgewicht der Polyamid-Formmasse.

Der Anteil von Komponente (D) in der Formmasse liegt bevorzugt im Bereich von 0,1 bis 30 Gew.-%, besonders bevorzugt von 0,3 bis 25 Gew.-%, bezogen auf das Gesamtgewicht der Polyamid-Formmasse.

Im Folgenden werden die einzelnen Komponenten der erfindungsgemäßen Polyamid-Formmasse näher beschrieben.

### Komponente (A)

Gemäß einer bevorzugten Ausführungsform der vorliegenden Erfindung besitzt das mindestens eine teilkristalline, teilaromatische Polyamid (A):
- eine relative Viskosität (RV), gemessen nach EN ISO 307 (2007), von 1,45 bis 2,10, bevorzugt von 1,50 bis 1,90, besonders bevorzugt von1,55 bis 1,80, und/oder
- eine Schmelzwärme, gemessen nach EN ISO 11357-3 (2013), von mindestens 25 J/g, bevorzugt mindestens 30 J/g, besonders bevorzugt mindestens 35 J/g, und/oder
- eine Schmelztemperatur, gemessen nach EN ISO 11357-3 (2013), von mindestens 255 °C, bevorzugt 270 °C bis 350 °C, besonders bevorzugt von 280 bis 340 °C.

Gemäß der vorliegenden Erfindung ist das mindestens eine teilkristalline, teilaromatische Polyamid (A) gebildet ist aus den Monomeren (a1) bis (a2) und gegebenenfalls (a3) und gegebenenfalls (a4):
(a1) mindestens eines Diamins, ausgewählt aus der Gruppe bestehend aus 1,4-Butandiamin, 1,5-Pentandiamin, 1,6-Hexandiamin, 1,8-Octandiamin, 1,9-Nonandiamin, 1,10-Decandiamin, 1,12-Dodecandiamin, 2-Methyl-1,5-Pentandiamin, 2-Methyl-1,8-octandiamin, Bis(4-aminocyclohexyl)methan, Bis(4-amino-3-methyl-cyclohexyl)methan, Bis(4-amino-3,5-dimethyl-cyclohexyl)methan, Bis(aminomethyl)cyclohexan, Isophorondiamin, m-Xylylendiamin und p-Xylylendiamin, und
(a2) mindestens einer aromatischen Dicarbonsäure, ausgewählt aus der Gruppe bestehend aus Terephthalsäure, Isophthalsäure und Naphthalindicarbonsäure, und gegebenenfalls
(a3) mindestens einer Dicarbonsäure, ausgewählt aus der Gruppe bestehend aus 1,6-Hexandisäure, 1,9-Nonandisäure, 1,10-Decandisäure, 1,12-Dodecandisäure, 1,13-Tridecandisäure, 1,14-Tetradecandisäure, 1,15-Pentadecansäure, 1,16-Hexadecandisäure, 1,17-Heptadecandisäure, 1,18-Octadecandisäure, Cyclohexandicarbonsäure und dimere Fettsäure mit 36 oder 44 C-Atomen, und gegebenenfalls
(a4) einem oder mehreren Lactamen oder ω-Aminosäuren, ausgewählt aus der Gruppe bestehend aus Lactam-6, Lactam-11, Lactam-12, 1,6-Aminohexansäure, 1,11-Aminoundecansäure und 1,12-Aminododecansäure.

Gemäß einer besonders bevorzugten Ausführungsform der vorliegenden Erfindung ist das mindestens eine teilkristalline, teilaromatische Polyamid (A) gebildet ist aus den Monomeren (a1) bis (a2) und gegebenenfalls (a3) und gegebenenfalls (a4):
(a1) mindestens eines Diamins, ausgewählt aus der Gruppe bestehend aus 1,4-Butandiamin, 1,5-Pentandiamin, 1,6-Hexandiamin, 1,8-Octandiamin, 1,9-Nonandiamin, 1,10-Decandiamin, 1,12-Dodecandiamin, 2-Methyl-1,5-Pentandiamin, 2-Methyl-1,8-octandiamin, Bis(4-aminocyclohexyl)methan, Bis(4-amino-3-methyl-cyclohexyl)methan und Bis(aminomethyl)cyclohexan, und
(a2) mindestens einer aromatischen Dicarbonsäure, ausgewählt aus der Gruppe bestehend aus Terephthalsäure und Isophthalsäure, und gegebenenfalls
(a3) mindestens einer Dicarbonsäure, ausgewählt aus der Gruppe bestehend aus 1,6-Hexandisäure, 1,10-Decandisäure, 1,12-Dodecandisäure und 1,16-Hexadecandisäure, und gegebenenfalls
(a4) einem oder mehreren Lactamen oder ω-Aminosäuren, ausgewählt aus der Gruppe bestehend aus Lactam-6, Lactam-12, 1,6-Aminohexansäure und 1,12-Aminododecansäure.

Gemäß einer ganz besonders bevorzugten Ausführungsform der vorliegenden Erfindung ist das mindestens eine teilkristalline, teilaromatische Polyamid (A) gebildet ist aus den Monomeren (a1) bis (a2) und gegebenenfalls (a3):
(a1) mindestens eines Diamins, ausgewählt aus der Gruppe bestehend aus 1,6-Hexandiamin, 1,10-Decandiamin und Bis(aminomethyl)cyclohexan, und
(a2) mindestens einer aromatischen Dicarbonsäure, ausgewählt aus der Gruppe bestehend aus Terephthalsäure und Isophthalsäure, und gegebenenfalls
(a3) mindestens einer Dicarbonsäure, ausgewählt aus der Gruppe bestehend aus 1,6-Hexandisäure, 1,10-Decandisäure und 1,12-Dodecandisäure.

Gemäß einer weiteren bevorzugten Ausführungsform der vorliegenden Erfindung enthält das mindestens eine teilkristalline, teilaromatische Polyamid (A):
- mindestens 10 Mol-%, bevorzugt mindestens 20 Mol-%, besonders bevorzugt mindestens 25 Mol-% 1,6-Hexandiamin, und
- mindestens 10 Mol-%, bevorzugt mindestens 20 Mol-%, besonders bevorzugt mindestens 25 Mol-% Terephthalsäure.

Gemäß einer weiteren bevorzugten Ausführungsform der vorliegenden Erfindung ist das mindestens eine teilkristalline, teilaromatische Polyamid (A) ausgewählt aus der Gruppe bestehend aus:
- PA 4T/66, PA 4T/6T, PA 4T/8T, PA 6T/8T, PA 4T/MPMDT, PA 4T/6T/MPMDT, PA 4T/4I, PA 4T/6I, PA 5T/51I, PA 6T/MPMDT, PA 6T/MPMDT/6I, PA 6T/6I, PA 6T/66, PA 6T/6, PA 6T/12, PA 6T/66/6, PA 6T/610, PA 6T/612, PA 6T/10I, PA 6T/9T, PA 6T/12T, PA 6T/6I/6, PA 6T/6I/66, PA 6T/6I/612, PA 6T/6I/12, PA 9T/MODT, PA 9T/9I, PA 10T, PA 12T, PA 12T/12I, PA 10T/1012, PA 10T/6T, PA 10T/10I, PA10T/106, PA10T/12, PA10T/11, PA 10T/6T/612, PA 10T/6T/10I/6I, PA 10T/6T/1012/612, PA 6T/BACT, PA 6T/BACT/66, PA 6T/6I/BACT/BACl, PA 6T/BACT/MACMT, PA 6T/BACT/PACMT, PA 6T/BACT/TMDCT, PA 4T/6T/8T, PA 4T/6T/10T, PA 4T/8T/10T, PA 6T/8T/10T und deren Copolyamiden,
- besonders bevorzugt ausgewählt aus der Gruppe bestehend aus PA 6T/MPMDT, PA 6T/6I, PA 6T/66, PA 6T/6, PA 6T/12, PA 6T/66/6, PA 6T/6I/6, PA 6T/6I/66, PA 6T/6I/612, PA 9T/MODT, PA 10T, PA 12T, PA 10T/1012, PA 10T/6T, PA 10T/10I, PA 10T/6T/612, PA 10T/6T/10I/6I, PA 10T/6T/1012/612, PA 6T/BACT, PA 6T/BACT/66, PA 6T/BACT/MACMT und PA 6T/BACT/PACMT,
- ganz besonders bevorzugt ausgewählt aus der Gruppe bestehend aus PA 6T/6I, PA 6T/66, PA 6T/66/6, PA 6T/6I/66, PA 6T/6I/612, PA 10T/1012, PA 10T/6T, PA 10T/6T/612, PA 10T/6T/10I/6I, PA 10T/6T/1012/612, PA 6T/BACT und PA 6T/BACT/66.

Gemäß einer weiteren bevorzugten Ausführungsform der vorliegenden Erfindung ist das mindestens eine teilkristalline, teilaromatische Polyamid (A) frei von Lactamen und ω-Aminosäuren.

Gemäß einer weiteren bevorzugten Ausführungsform der vorliegenden Erfindung ist das teilkristalline, teilaromatische Polyamid (A) PA 6T/66, gebildet aus:
- 50 Mol-% 1,6-Hexandiamin,
- 14 bis 40 Mol-%, bevorzugt 20 bis 35 Mol-%, besonders bevorzugt 25 bis 30 Mol-% Terephthalsäure, und
- 10 bis 36 Mol-%, bevorzugt 15 bis 30 Mol-%, besonders bevorzugt 20 bis 25 Mol-% 1,6-Hexansäure.

### Komponente (B)

Der mindestens eine funktionalisierte Schlagzähmodifikator ist vorzugsweise ausgewählt aus der Gruppe bestehend aus Polyethylen, Polypropylen, Polyolefin-Copolymeren, Acrylat-Copolymeren, Acrylsäure-Copolymeren, Vinylacetat-Copolymeren, Styrol-Copolymeren, Styrol-Blockcopolymeren, ionischen Ethylen-Copolymeren in denen die Säuregruppen teilweise mit Metallionen neutralisiert sind, Kern-Mantel-Schlagzähmodifikatoren und Mischungen davon.

Gemäß einer bevorzugten Ausführungsform der vorliegenden Erfindung erfolgt die Funktionalisierung von Komponente (B) durch Copolymerisation und/oder durch Pfropfen. Dazu wird besonders bevorzugt eine Verbindung ausgewählt aus der Gruppe bestehend aus ungesättigten Carbonsäuren, ungesättigten Carbonsäurederivaten und Mischungen hiervon und/oder ungesättigten Glycidylverbindungen verwendet. Diese Verbindung ist insbesondere bevorzugt ausgewählt aus der Gruppe bestehend aus ungesättigten Carbonsäureestern, insbesondere Acrylsäureestern und/oder Methacrylsäureestern, ungesättigten Carbonsäureanhydriden, insbesondere Maleinsäureanhydrid, Glycidylacrylsäure, Glycidylmethacrylsäure, α-Ethylacrylsäure, Maleinsäure, Fumarsäure, Itaconsäure, Citraconsäure, Aconitsäure, Tetrahydrophthalsäure, Butenylsuccinsäure und Mischungen hiervon.

Wenn die Funktionalisierung durch Copolymerisation erfolgt, liegt der Gewichtsanteil jeder einzelnen zur Funktionalisierung eingesetzten Verbindung bevorzugt im Bereich von 3 bis 25 Gew.-%, besonders bevorzugt von 4 bis 20 Gew.-% und insbesondere bevorzugt von 4,5 bis 15 Gew.-%, jeweils bezogen auf das Gesamtgewicht von Komponente (B).

Sofern die Funktionalisierung durch Pfropfung erfolgt, liegt der Gewichtsanteil jeder einzelnen zur Funktionalisierung eingesetzten Verbindung bevorzugt im Bereich von 0,3 bis 2,5 Gew.-%, besonders bevorzugt von 0,4 bis 2,0 Gew.-% und insbesondere bevorzugt von 0,5 bis 1,9 Gew.-%, jeweils bezogen auf das Gesamtgewicht von Komponente (B).

Durch Copolymersiation funktionalisierte Schlagzähmodifikatoren können zusätzlich auch noch durch Pfropfung funktionalisiert sein.

Die Polyolefin-Copolymeren sind bevorzugt ausgewählt aus der Gruppe bestehend aus Ethylen-α-Olefin-Copolymeren, Propylen-α-Olefin-Copolymeren, Ethylen-Propylen-Copolymeren, Ethylen-Propylen-Dien-Copolymeren und deren Mischungen, wobei die α-Olefine bevorzugt 3 bis 18 Kohlenstoffatome besitzen. Besonders bevorzugt sind die α-Olefine ausgewählt aus der Gruppe bestehen aus Propen, 1-Buten, 1-Penten, 1-Hexen, 1-Octen, 1-Decen 1-Dodecen und Mischungen davon.

Beispiele für Ethylen-α-Olefin-Copolymere sind lineare Polyethylene mit mittleren Dichten im Bereich von 0,941 bis 0,950 g/cm³ (PE-LMD), lineare Polyethylene mit niedrigen Dichten im Bereich von 0,911 bis 0,940 g/cm³ (PE-LLD), lineare Polyethylene mit sehr niedrigen Dichten im Bereich von 0,900 bis 0,910 g/cm³ (PE-VLD), lineare Polyethylene mit ultraniedrigen Dichten im Bereich von 0,860 bis 0,899 g/cm³ (PE-ULD), Ethylen-Propylen-Copolymere, Ethylen-1-Buten-Copolymere oder Mischungen davon.

Unter den Ethylen-α-Olefin-Copolymeren sind Ethylen-Propylen-Copolymere, Ethylen-1-Buten-Copolymere, Ethylen-Propylen-1-Buten-Copolymere oder Mischungen davon bevorzugt.

Unter den Ethylen-Propylen-1-Buten-Copolymeren sind Copolymere bevorzugt, in denen die Monomere Ethylen e), Propylen f) und 1-Buten g) in folgenden molaren Anteilen verwendet werden:
e) Ethylen: 65 bis 90 Mol-%, bevorzugt 65 bis 87 Mol-%, besonders bevorzugt 71 bis 84 Mol-%;
f) Propylen: 8 bis 33 Mol-%, bevorzugt 10 bis 25 Mol-%, besonders bevorzugt 12 bis 20 Mol-%; sowie
g) 1-Buten: 2 bis 25 Mol-%, bevorzugt 3 bis 20 Mol-%, besonders bevorzugt 4 bis 15 Mol-%, ganz besonders bevorzugt 4 bis 9 Mol-%;
wobei sich die Monomere e), bis g) auf 100 Mol-% ergänzen.

Das Ethylen-Propylen-1-Buten-Copolymere kann die genannten Monomere e) bis g) in den angegebenen bevorzugten molaren Anteilen enthalten, jedoch ist in der Bezeichnung Ethylen-Propylen-1-Buten-Copolymer ebenso die Möglichkeit umfasst, dass mehrere Copolymere gemischt werden, die jeweils zwei der Monomere e) bis g), d.h. e) und f), e) und g) oder f) und g), enthalten, so dass in der Mischung die Monomere e) bis g) in den bevorzugten molaren Anteilen vorliegen. Besonders bevorzugt besteht solch eine Mischung aus einem Copolymer der Monomere e) und f) und einem Copolymer der Monomere e) und g), so dass in der Mischung die Monomere e) bis g) in den bevorzugten molaren Anteilen vorliegen.

Die Acrylat-Copolymeren, Acrylsäure-Copolymeren oder Vinylacetat-Copolymeren sind bevorzugt ausgewählt aus der Gruppe bestehend aus Ethylen-Acrylsäure-Copolymeren, Ethylen-Methacrylsäure-Copolymeren, Ethylen-Methacrylsäure-Acrylat-Copolymeren, Ethylen-Acrylsäure-AcrylatCopolymere, Ethylen-Glycidyl-Methacrylat-Copolymere, Ethylen- Acrylsäureester-Glycidyl-Methacrylat-Copolymere, Ethylen-Vinylacetat-Copolymeren, Ethylen-Acrylat-Copolymeren und deren Mischungen.

Die Styrol-Copolymere sind bevorzugt Styrol-Copolymere mit einem CoMonomer ausgewählt aus der Gruppe bestehend aus Butadien, Isopren, Acrylat und Mischungen davon.

Die Styrol-Blockcopolymeren sind bevorzugt ausgewählt aus der Gruppe bestehend aus Styrol-Butadien-Styrol-Triblockcopolymeren (SBS), Styrol-Isopren-Styrol-Triblockcopolymeren (SIS), Styrol-Ethylen/Butylen-Styrol-Triblockcopolymer (SEBS), Styrol-Ethylen/Popylen-Styrol-Triblockcopolymer (SEPS) und Mischungen davon.

Bei den Styrol-Ethylen/Butylen-Styrol-Triblockcopolymeren handelt es sich um lineare Triblockcopolymere aus einem Ethylen/Butylen-Block und zwei Styrolblöcken.

Bei den Styrol-Ethylen/Propylen-Styrol-Triblockcopolymeren handelt es sich um lineare Triblockcopolymere aus einem Ethylen/Propylen-Block und zwei Styrolblöcken.

Der Styrolanteil in den Styrol-Ethylen/Butylen-Styrol-Triblockcopolymeren oder Styrol-Ethylen/Popylen-Styrol-Triblockcopolymeren beträgt bevorzugt von 20 bis 45 Gew.-%, besonders bevorzugt von 25 bis 40 Gew.-% und ganz besonders bevorzugt von 25 bis 35 Gew.-%.

Die Styrol-Ethylen/Butylen-Styrol-Triblockcopolymere weisen bevorzugt einen MVR von 90 bis 160 cm³/10min, besonders bevorzugt von 100 bis 150 cm³/10min und ganz besonders bevorzugt von 110 bis 140 cm³/10min auf. Der MVR wird dabei bei 275°C und 5 kg nach ISO 1133 gemessen.

Die ionischen Ethylen-Copolymeren bestehen bevorzugt aus den Monomeren ausgewählt aus der Gruppe bestehend aus Ethylen, Propylen, Butylen, Acrylsäure, Acrylat, Methacrylsäure, Methacrylat und Mischungen davon, wobei die Säuregruppen teilweise mit Metallionen neutralisiert sind, besonders bevorzugt sind Ethylen-Methacrylsäure-Copolymere oder Ethylen-Methacrylsäure-Acrylat-Copolymere in denen die Säuregruppen teilweise mit Metallionen neutralisiert sind. Bei den zur Neutralisation verwendeten Metallionen handelt es sich bevorzugt um Natrium-, Zink-, Kalium-, Lithium-, Magnesium-Ionen und Mischungen davon, besonders bevorzugt sind Natrium-, Zink- und Magnesium-Ionen.

Bei den Kern-Mantel-Schlagzähmodifikatoren besteht der Kern bevorzugt aus Dienmonomeren, aromatischen Vinylmonomeren, nichtaromatischen Vinylmonomeren und Mischungen davon und gegebenenfalls vernetzenden Monomeren. Bei den Kern-Mantel-Schlagzähmodifikatoren besteht der Mantel bevorzugt aus aromatischen Vinylmonomeren, nichtaromatischen Vinylmonomeren und Mischungen davon und gegebenenfalls vernetzenden Monomeren.

Die Dienmonomere sind bevorzugt ausgewählt aus der Gruppe bestehend aus Butadien und Isopren und Mischungen davon.

Die aromatischen Vinylmonomeren sind bevorzugt ausgewählt aus der Gruppe bestehend aus Styrol, α-Methylstyrol, p-Methylstyrol, Ethylstyrol, tert.-Butylstyrol, Diphenylethylen, Vinyltoluol, Vinylxylol, Vinylnaphthalin, Isopropenylnaphthalin, Divinylbenzol, Vinylacetat, Phenylacrylat, Phenylmethacrylat und Mischungen davon.

Die nichtaromatischen Vinylmonomeren sind bevorzugt ausgewählt aus der Gruppe bestehend aus Acrylsäure, Alkylacrylaten, Methacrylsäure, Alkylmethacrylaten und Mischungen davon.

Die nichtaromatischen Vinylmonomeren sind besonders bevorzugt ausgewählt aus der Gruppe bestehend aus Acrylsäure, Ethylacrylat, Propylacrylat, n-Butylacrylat, iso-Butylacrylat, 2-ethylhexylacrylat, n-Octylacrylat, Decylacrylat, Laurylacrylat, Stearylacrylat, Methacrylsäure, Methylmethacrylat, Ethylmethacrylat, Propylmethacrylat, n-Butylmethacrylat, iso- Butylmethacrylat, Laurylmethacrylat, Stearylmethacrylat, iso-Bornylmethacrylat und Mischungen davon.

Die vernetzenden Monomeren sind bevorzugt ausgewählt aus der Gruppe bestehend aus Divinylbenzol, Diallylmaleat, Butylenglycoldiacrylat, Etylenglycoldimethacrylat, Allylmethacrylat und Mischungen davon.

In einer besonders bevorzugten Ausführungsform der erfindungsgemässen Polyamidformmasse wird der Schlagzähmodifikator ausgewählt aus der Gruppe bestehend aus
- Ethylen-Propylen-1-Buten-Copolymeren in denen die Monomere Ethylen e), Propylen f) und 1-Buten g) in folgenden molaren Anteilen verwendet werden:
   e) Ethylen: 65 bis 90 mol-%, bevorzugt 65 bis 87 mol-%, besonders bevorzugt 71 bis 84 mol-%,
   f) Propylen: 8 bis 33 mol-%, bevorzugt 10 bis 25 mol-%, besonders bevorzugt 12 bis 20 mol-%, sowie
   g) 1-Buten: 2 bis 25 mol-%, bevorzugt 3 bis 20 mol-%, besonders bevorzugt 4 bis 15 mol-%, ganz besonders bevorzugt 4 bis 9 mol-%,
   wobei sich die Komponenten e), bis g) zu 100 mol-% addieren,
   und die Ethylen-Propylen-1-Buten-Copolymeren mit 0,3 bis 2,5 Gew.-% Maleinsäureanhydrid gepfropft sind,
- Ethylen-1-Buten-Copolymeren mit 35 bis 65 Gew.-% 1-Buten, gepfropft mit 0,3 bis 2,5 Gew.-% Maleinsäureanhydrid, und
- Mischungen hiervon.

In einer besonders bevorzugten Ausführungsform der erfindungsgemässen Polyamidformmasse wird der Schlagzähmodifikator ausgewählt aus der Gruppe bestehend aus
- Ethylen-Propylen-1-Buten-Copolymeren bestehend aus 71 bis 84 mol% Ethylen e), 12 bis 20 mol-% Propylen f) sowie 4 bis 9 mol-% 1-Buten g), wobei sich die Komponenten e) bis g) zu 100 mol-% addieren und die Ethylen-Propylen-1-Buten-Copolymeren mit 0,3 bis 0,9 Gew.-% Maleinsäureanhydrid gepfropft sind,
- Ethylen-1-Buten-Copolymeren mit 40 bis 60 Gew.-% 1-Buten, gepfropft mit 0,9 bis 1,5 Gew.-% Maleinsäureanhydrid, und
- Mischungen hiervon.

In einer weiteren besonders bevorzugten Ausführungsform der erfindungsgemäßen Polyamidformmasse wird der Schlagzähmodifikator ausgewählt aus der Gruppe bestehend aus
- einem Blend aus Ethylen-Propylen-Copolymer und Ethylen-1-Buten-Copolymer im Gewichtsverhältnis 67 : 33, gepfropft mit 0,6 Gew.-% Maleinsäureanhydrid,
- einem Ethylen-1-Buten-Copolymeren mit 50 Gew.-% 1-Buten, gepfropft mit 1,2 Gew.-% Maleinsäureanhydrid, und
- Mischungen hiervon.

In einer anderen besonders bevorzugten Ausführungsform der erfindungsgemäßen Polyamidformmasse handelt es sich bei dem Schlagzähmodifikator um ein Blend aus Ethylen-Propylen-Copolymer und Ethylen-1-Buten-Copolymer im Gewichtsverhältnis 67 : 33, gepfropft mit 0,6 Gew.-% Maleinsäureanhydrid.

In einer anderen besonders bevorzugten Ausführungsform der erfindungsgemäßen Polyamidformmasse handelt es sich bei dem Schlagzähmodifikator um ein Ethylen-1-Buten-Copolymer mit 50 Gew.-% 1-Buten, gepfropft mit 1,2 Gew.-% Maleinsäureanhydrid.

Der mindestens eine Schlagzähmodifikator gemäß Komponente (B) kann auch in Form einer Mischung oder eines Blends mit einem oder mehreren unfunktionalisierten Schlagzähmodifikatoren gemäß Komponente (B) eingesetzt werden, wobei der Funktionalisierungsgrad der Mischung oder des Blends innerhalb der vorher festgelegten Bereiche liegt. Gemäß einer bevorzugten Ausführungsform enthalten die erfindungsgemäßen Polyamid-Formmassen jedoch keine unfunktionalisierten Schlagzähmodifikatoren.

### Komponente (C)

Gemäß einer bevorzugten Ausführungsform besitzt das mindestens eine substitutierte oder unsubstituierte Metallocen eine Schmelztemperatur von 120 °C bis 350 °C, bevorzugt 140 °C bis 320 °C, besonders bevorzugt 150 bis 280 °C.

Gemäß einer bevorzugten Ausführungsform weist das mindestens eine substitutierte oder unsubstituierte Metallocen als zentrales Metallatom ein Metall der Gruppe 3 bis 12 oder der Lanthanoiden auf, bevorzugt Vanadium, Chrom, Mangan, Eisen, Kobalt, Nickel, Ruthenium, Osmium, Zink, Rhodium, Cadmium, Iridium, Magnesium, Lanthan, Cer, Samarium, Zirkon, Scandium, Yttrium und Kombinationen hiervon, besonders bevorzugt unsubstituierte oder substituierte Bis(η⁵-cyclopentadienyl)eisen, insbesondere ausgewählt aus der Gruppe bestehend aus Ferrocen, 3-Carboxybutyrylferrocen, 3-Carboxypropionylferrocen, 6-Mercaptohexylferrocen, Aminomethylferrocene, Dimethylaminomethylferrocen, Diphenylphosphinoferrocen, 1-Ferrocenacrylonitril, 1-Ferrocenylethanol, 1,1'-Bis(1-Hydroxyethyl)ferrocen, 1,1'-Diacetylferrocen, 1,1'-Diaminoferrocen, 1,1'-Dibenzoylferrocen, 1,1'-Dibutylferrocen, 1,1'-Diethylferrocen, 1,1'-Di-hexylferrocen, 1,1'-Dimethylferrocen, 1,1'-Divinylferrocen, 1,1'-Ferrocen-dicarboxaldehyd, 1,1'-Ferrocendicarboxamid, 1,1'-Ferrocendicarbonsäure, 1,1'-Ferrocendimethanol, 1,1'-Ferrocenylessigsäure, 1,1'-Ferrocenyl-propansäure, 1,1'-Ferrocenylbutansäure, 1,1'-Ferrocenylpentansäure, 1,2,3,4,5-Pentamethylferrocen, 2-Ferrocenylethanol, 3-Ferrocenylpropanol, 3-Ferrocenylpropansäure, 4-Ferrocenylbutansäure, 5-Ferrocenylpentansäure, Acetylferrocen, α-(N,N-Dimethylamino)ethylferrocen, Aminoferrocen, Ethylferrocen, Ferrocenylessigsäure, Ferrocenylmethanol, Octylferrocen, Ferrocencarbonsäure, Ferrocencarboxamid, Ferrocencarboxaldehyd, Propylferrocen, Hexylferrocen, Hydroxyethylferrocen, Benzoylferrocen, Butylferrocen, Methylferrocen, Vinylferrocen und Bis(pentamethylcyclopentadienyl)eisen(II).

Bis(η⁵-cyclopentadienyl)eisen wird auch als Ferrocen bezeichnet (CAS-Nr. 102-54-5). Beide Bezeichnungen werden in dieser Anmeldung synonym verwendet.

Das substituierte Metallocen kann an einem oder beiden Cyclopentadienylringen einfach oder mehrfach substituiert sein. Im Fall, dass beide Cyclopentadienylringe substituiert sind, kann es sich um den gleichen oder verschiedene Substituenten, bevorzugt um den gleichen Substituenten, handeln. Bevorzugt ist jeder Cyclopentadienylring nur einfach substituiert. Besonders bevorzugt ist nur einer der beiden Cyclopentadienylringe substituiert. Insbesondere bevorzugt ist nur einer der beiden Cyclopentadienylringe einfach substituiert.

Die Substituenten sind vorzugsweise ausgewählt aus der Gruppe bestehend aus Alkyl-, Alkylen-, Arylen-Resten, Resten von Carbonsäuren, CarbonsäureDerivaten, Oxoalkansäuren, Alkoholen, Aminen und Resten von Phosphor enthaltenden Substituenten.

Die Substituenten sind bevorzugt ausgewählt aus der Gruppe bestehend aus Alkylresten mit 1 bis 12 C-Atomen, Alkylenresten mit 2 bis 12 C-Atomen, Arylresten mit 6 bis 12 C-Atomen, Resten von Carbonsäuren mit 1 bis 12 C-Atomen, Carbonsäureestern mit 2 bis 20 C-Atomen, Carbonsäureanhydriden mit 2 bis 12 C-Atomen, Oxoalkansäuren mit 1 bis 12 C-Atomen, Alkoholen mit 1 bis 12 C-Atomen, Aminen mit 0 bis 12 C-Atomen und Resten von Phosphor enthaltenden Substituenten.

Besonders bevorzugt sind die Substituenten ausgewählt aus der Gruppe bestehend aus Alkylresten mit 1 bis 9 C-Atomen, Alkylenresten mit 2 bis 9 C-Atomen, Arylresten mit 6 bis 9 C-Atomen, Resten von Carbonsäuren mit 1 bis 9 C-Atomen, Carbonsäureestern mit 2 bis 18 C-Atomen, Carbonsäureanhydriden mit 2 bis 9 C-Atomen, Oxoalkansäuren mit 1 bis 9 C-Atomen, Alkoholen mit 1 bis 9 C-Atomen, Aminen mit 0 bis 9 C-Atomen und Resten von Phosphor enthaltenden Substituenten.

Ganz besonders bevorzugt sind die Substituenten ausgewählt aus der Gruppe bestehend aus Alkylresten mit 1 bis 6 C-Atomen, Alkylenresten mit 2 bis 6 C-Atomen, Arylresten mit 6 bis 7 C-Atomen, Resten von Carbonsäuren mit 1 bis 6 C-Atomen, Carbonsäureestern mit 2 bis 14 C-Atomen, Carbonsäureanhydriden mit 2 bis 6 C-Atomen, Oxoalkansäuren mit 1 bis 6 C-Atomen, Alkoholen mit 1 bis 6 C-Atomen, Aminen mit 0 bis 6 C-Atomen und Resten von Phosphor enthaltenden Substituenten.

Gemäß einer bevorzugten Ausführungsform der vorliegenden Erfindung ist das mindestens eine unsubstituierte oder substituierte Metallocen Bis(η⁵cyclopenta-dienyl)eisen ausgewählt aus der Gruppe bestehend aus Ferrocen, 3-Carboxy-butyrylferrocen, 3-Carboxypropionylferrocen, 6-Mercaptohexylferrocen, Aminomethylferrocene, Dimethylaminomethylferrocen, Diphenylphosphino-ferrocen, 1-Ferrocenacrylonitril, 1-Ferrocenylethanol, 1,1'-Bis(1-Hydroxy-ethyl)ferrocen, 1,1'-Diacetylferrocen, 1,1'-Diaminoferrocen, 1,1'-Dibenzoylferrocen, 1,1'-Dibutylferrocen, 1,1'-Diethylferrocen, 1,1'-Dihexylferrocen, 1,1'-Dimethylferrocen, 1,1'-Divinylferrocen, 1,1'-Ferrocendicarboxaldehyd, 1,1'-Ferrocendicarboxamid, 1,1'-Ferrocendicarbonsäure, 1,1'-Ferrocen-dimethanol, 1,1'-Ferrocenylessigsäure, 1,1'-Ferrocenylpropansäure, 1,1'-Ferrocenylbutansäure, 1,1'-Ferrocenylpentansäure, 1,2,3,4,5-Penta-methylferrocen, 2-Ferrocenylethanol, 3-Ferrocenylpropanol, 3-Ferrocenyl-propansäure, 4-Ferrocenylbutansäure, 5-Ferrocenylpentansäure, Acetyl-ferrocen, α-(N,N-Di-methylamino)ethyl-ferrocen, Aminoferrocen, Ethyl-ferrocen, Ferrocenylessigsäure, Ferrocenylmethanol, Octylferrocen, Ferrocencarbonsäure, Ferrocencarboxamid, Ferrocencarboxaldehyd, Propylferrocen, Hexylferrocen, Hydroxyethylferrocen, Benzoylferrocen, Butylferrocen, Methylferrocen, Vinylferrocen und Bis(pentamethylcyclopentadienyl)eisen(II).

Gemäß einer besonders bevorzugten Ausführungsform der vorliegenden Erfindung ist das mindestens eine unsubstituierte oder substituierte Metallocen Bis(η⁵-cyclopenta-dienyl)eisen ausgewählt aus der Gruppe bestehend aus Ferrocen, Aminoferrocen, 1,1'-Diaminoferrocen, Ferrocencarbonsäure, 1,1'-Ferrocendicarbonsäure, Aminomethylferrocen, 1,1'-Bis(aminomethyl)ferrocen, Dimethylaminomethylferrocen, 1,1'-Bis(dimethylaminomethyl)ferrocen, Ferrocenylessigsäure, 1,1'-Ferrocenylessigsäure, Ferrocenylmethanol, 1,1'-Ferrocendimethanol, Ferrocencarboxaldehyd, 1,1'-Ferrocendicarboxal-dehyd, Acetylferrocen, 1,1'-Diacetylferrocen, Methylferrocen und 1,1'-Di-methylferrocen.

Gemäß einer weiteren besonders bevorzugten Ausführungsform der vorliegenden Erfindung ist das mindestens eine unsubstituierte oder substituierte Metallocen Bis(η⁵-cyclopenta-dienyl)eisen ausgewählt aus der Gruppe bestehend aus Ferrocen, Amino-ferrocen,1,1'-Diaminoferrocen, Ferrocencarbonsäure, 1,1'-Ferrocendicarbon-säure, Aminomethylferrocen, 1,1'-Bis(aminomethyl)-ferrocen, Ferrocenyl-essigsäure und 1,1'-Ferrocenylessigsäure.

Gemäß einer ganz besonders bevorzugten Ausführungsform der vorliegenden Erfindung ist das mindestens eine unsubstituierte oder substituierte Metallocen Ferrocen.

### Komponente (D)

Gemäß einer bevorzugten Ausführungsform der vorliegenden Erfindung ist der mindestens eine Zusatzstoff (Komponente (D)) ausgewählt aus der Gruppe bestehend aus sich von der Komponente (C) unterscheidenden anorganischen Stabilisatoren, organischen Stabilisatoren, insbesondere Antioxidantien, Antiozonantien, Lichtschutzmitteln, UV-Stabilisatoren, UV-Absorbern oder UV-Blockern, IR-Absorbern, NIR-Absorbern, Antiblockmitteln, Nukleierungsmitteln, Kristallisationsbeschleunigern, Kristallisationsverzögerern, kettenverlängernden Additiven, Leitfähigkeitsadditiven, Trennmitteln, Gleitmitteln, Farbstoffen, Markierungsmitteln, anorganischen Pigmenten, organischen Pigmenten, Ruß, Graphit, Kohlenstoffnanoröhrchen, Graphen, Titandioxid, Zinksulfid, Zinkoxid, Bariumcarbonat, Bariumsulfat, photochromen Agenzien, Antistatika, Entformungsmitteln, optischen Aufhellern, halogenfreien Flammschutzmitteln, metallischen Pigmenten, Metallflittern, metallbeschichteten Partikeln, faser- oder nadelförmigen Füllstoffen, teilchenförmigen Füllstoffen und deren Mischungen.

In einer besonders bevorzugten Ausführungsform der vorliegenden Erfindung ist der mindestens eine Zusatzstoff (Komponente (D)) ausgewählt aus der Gruppe bestehend aus organischen Stabilisatoren, insbesondere Antioxidantien, Antiozonantien, Lichtschutzmitteln, UV-Stabilisatoren, UV-Absorbern oder UV-Blockern, IR-Absorbern, NIR-Absorbern, Antiblockmitteln, Nukleierungsmitteln, Kristallisationsbeschleunigern, Kristallisationsverzögerern, kettenverlängernden Additiven, Leitfähigkeitsadditiven, Trennmitteln, Gleitmitteln, Farbstoffen, Markierungsmitteln, anorganischen Pigmenten, organischen Pigmenten, Ruß, Graphit, Kohlenstoffnanoröhrchen, Graphen, Titandioxid, Zinksulfid, Zinkoxid, Bariumcarbonat, Bariumsulfat, photochromen Agenzien, Antistatika, Entformungsmitteln, optischen Aufhellern, halogenfreien Flammschutzmitteln, metallischen Pigmenten, Metallflittern, metallbeschichteten Partikeln, teilchenförmigen Füllstoffen und deren Mischungen.

Bei den organischen Stabilisatoren sind Phenol-, Phosphit-, Phosphonit-Verbindungen, Stabilisatoren auf Basis eines gehinderten Amins (HALS) oder deren Mischungen besonders bevorzugt.

Die teilchenförmigen Füllstoffe sind vorzugsweise ausgewählt aus der Gruppe bestehend aus Dolomit, Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Zinkoxid, Zinksulfid, Kreide, Kalk, Kalksteinmehl, Schiefermehl, Feldspat, Bariumcarbonat, Bariumsulfat, synthetischen Schichtsilikaten, natürlichen Schichtsilikaten, permanentmagnetischen oder magnetisierbaren Metallen oder Legierungen, Glasflakes, Glaskugeln, Hohlglaskugeln, hohlkugeligen Silikatfüllstoffen und Mischungen hiervon.

Besonders bevorzugt werden die teilchenförmigen Füllstoffe aus der Gruppe bestehend aus Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Kreide, Kalk, Kalksteinmehl, Schiefermehl, Feldspat, Bariumcarbonat, Bariumsulfat, synthetischen Schichtsilikaten, natürlichen Schichtsilikaten, Glasflakes, Glaskugeln, Hohlglaskugeln, hohlkugeligen Silikatfüllstoffen und Mischungen hiervon ausgewählt.

Ganz besonders bevorzugt werden die teilchenförmigen Füllstoffe aus der Gruppe bestehend aus Silikaten, Talkum, Glimmer, Kaolin, Titandioxid, gemahlenem oder gefälltem Calciumcarbonat, Kreide, Kalksteinmehl, Schiefermehl, synthetischen Schichtsilikaten, natürlichen Schichtsilikaten, Glasflakes, Glaskugeln, Hohlglaskugeln und Mischungen hiervon ausgewählt.

Der mindestens eine Zusatzstoff kann auch in Masterbatchform zugegeben werden. Bevorzugt wird als Basispolymer des Masterbatches ein Polyamid oder Polyolefin verwendet. Das Polyamid ist vorzugsweise ausgewählt aus der Gruppe bestehend aus den PA 6, PA 66, PA 6/12, PA 6/66, PA 6/69, PA 12, PA 1012, PA 1212 und deren Mischungen oder besteht aus dem Polyamid (A).

### Formkörper

Erfindungsgemäß werden ebenso Formkörper bereitgestellt, die aus den zuvor beschriebenen Formmassen herstellbar sind oder diese enthalten. Die erfindungsgemäßen Formkörper können aus der erfindungsgemäßen Polyamid-Formmasse über die gängigen Verarbeitungstechniken, wie Spritzguss, Extrusion oder Blasformen, insbesondere durch Spritzguss hergestellt werden. Es handelt sich dabei bevorzugt um Formkörper aus den Bereichen Automobil, insbesondere im Motorraum, Elektro, Elektronik, Maschinenbau, Energieerzeugung und Energieversorgung.

Eine bevorzugte Ausführungsform sieht vor, dass der Formkörper ausgewählt ist aus der Gruppe bestehend aus Zylinderkopfhauben, Motorabdeckungen, Gehäusen, Befestigungselementen wie Klammern, Haltern, Clipsen, Kabelbindern, Dübeln oder Nieten und Teilen für Ladeluftkühler, Ladeluftkühlerklappen, Ansaugrohren, insbesondere Ansaugkrümmern, Abgasleitungen, Konnektoren, Zahnräder, Lüfterräder, Kühlwasserkästen, Gehäusen oder Teilen von Wärmetauschern, Kühlmittelkühler, Thermostaten, Wasserpumpen, Heizkörpern, Befestigungsteilen, Leiterplatten, Folien, Leitungen, Gehäusen und Teilen von Elektro/Elektronikgeräten, Gehäusen und Teilen von Heizlüftern, Schaltern, Verteilern, Relais, Widerständen, Kondensatoren, Spulen, Lampen, Dioden, LEDs, Transistoren, Konnektoren, Reglern, Speichern und Sensoren.

### Verwendungen

Weiterhin betrifft die vorliegende Erfindung die Verwendung der oben definierten erfindungsgemäßen Polyamid-Formmasse zur Herstellung von Formkörpern, bevorzugt von Teilen oder Bauteilen für die Bereiche Automobil, insbesondere im Motorraum, Elektro, Elektronik, Maschinenbau, Energieerzeugung, Energieversorgung, wie Zylinderkopfhauben, Motorabdeckungen, Gehäusen, Befestigungselementen wie Klammern, Haltern, Clipsen, Kabelbindern, Dübeln oder Nieten und Teilen für Ladeluftkühler, Ladeluftkühlerklappen, Ansaugrohren, insbesondere Ansaugkrümmern, Abgasleitungen, Konnektoren, Zahnräder, Lüfterräder, Kühlwasserkästen, Gehäusen oder Teilen von Wärmetauschern, Kühlmittelkühler, Thermostaten, Wasserpumpen, Heizkörpern, Befestigungsteilen, Leiterplatten, Folien, Leitungen, Gehäusen und Teilen von Elektro/Elektronikgeräten, Gehäusen und Teilen von Heizlüftern, Schaltern, Verteilern, Relais, Widerständen, Kondensatoren, Spulen, Lampen, Dioden, LEDs, Transistoren, Konnektoren, Reglern, Speichern und Sensoren.

### Messmethoden, Lagerungsbedingungen und Herstellung der Prüfkörper

### Relative Viskosität:

Die relative Viskosität wurde gemäß ISO 307 (2007) bei 20 °C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Schmelzpunkt und Schmelzwärme:

Die Bestimmung erfolgte nach ISO 11357-3 (2013) an Granulat.

Die Differential Scanning Calorimetry (DSC) wurde bei jeder der beiden Aufheizungen mit einer Aufheizrate von 20 K/min durchgeführt. Nach der ersten Aufheizung wird mit 20 K/min abgekühlt. Der Schmelzpunkt und die Schmelzwärme werden bei der zweiten Aufheizung bestimmt. Beim Schmelzpunkt wird die Temperatur am Peakmaximum angegeben.

### MFR (melt flow rate) und MVR (melt volume rate)

Die Bestimmung erfolgte nach ASTM D 1238 bei einer Temperatur von 230 °C und einer Belastung von 2,16 kg.

### Reissfestigkeit und Reissdehnung:

Die Bestimmung erfolgte nach ISO 527 mit einer Zuggeschwindigkeit von 50 mm/min bei einer Temperatur von 23 °C. Als Prüfkörper wurden bei erhöhter Temperatur gelagerte und anschließend abgekühlte ISO-Zugstäbe (Typ A1, Masse 170 x 20/10 x 4) verwendet, hergestellt gemäß der Norm: ISO/CD 3167 (2003). Zur Abkühlung wurden die ISO-Zugstäbe vor der Zugprüfung mindestens 48 h bei Raumtemperatur in trockener Umgebung, d.h. über Silicagel, aufbewahrt.

### Lagerungsbedingungen:

Die Lagerung erfolgte in einem Trockenschrank bei 180 °C.

Die Probenentnahme fand bei allen Lagerungen zu den gleichen Zeitpunkten statt, und zwar jeweils nach 504 h, 1008 h, 1512 h und 2016 h. Pro Material, und Lagerungszeit wurden jeweils 5 ISO-Zugstäbe (Typ A1, Masse 170 x 20/10 x 4, hergestellt gemäß der Norm: ISO/CD 3167 (2003)) gelagert und das arithmetische Mittel der 5 Messwerte gebildet.

### Herstellung der Prüfkörper:

Zur Herstellung der ISO-Zugstäbe wurde Granulat mit einem Wassergehalt von weniger als 0,1 Gew.-% verwendet.

Die ISO-Zugstäbe wurden auf einer Spritzgussmaschine der Firma Arburg, Modell Allrounder 420 C 1000-250 gefertigt. Dabei wurden vom Einzug zur Düse auf- und absteigende Zylindertemperaturen verwendet.

| | |
|---|---|
| Zylindertemperaturen: | 280 bis 340 °C |
| Werkzeugtemperatur: | 60°C |

Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel, aufbewahrt.

### Allgemeine Herstellungsvorschrift für die erfindungsgemäßen Polyamid-Formmassen

Zur Herstellung der erfindungsgemäßen Polyamid-Formmasse werden die Komponenten (A), (C) und gegebenenfalls (B) und gegebenenfalls (D) auf üblichen Compoundiermaschinen, wie z.B. ein- oder zweiwelligen Extrudern oder Schneckenknetern gemischt. Die Komponenten werden dabei einzelnen über gravimetrische oder volumetrische Dosierwaagen in den Einzug oder jeweils in einen Sidefeeder dosiert oder in Form eines Dryblends zugeführt.

Werden Zusatzstoffe (Komponente (D)) verwendet, können diese direkt oder in Form eines Masterbatches eingebracht werden. Bei dem Trägermaterial des Masterbatches handelt es sich bevorzugt um ein Polyamid oder ein Polyolefin. Das Polyamid ist vorzugsweise ausgewählt aus der Gruppe bestehend aus den PA 6, PA 66, PA 6/12, PA 6/66, PA 6/69, PA 12, PA 1012, PA 1212 und deren Mischungen oder dem Polyamid (A).

Zur Dryblend-Herstellung werden das getrockneten Granulat des Polyamids (A), die Komponente (C) und gegebenenfalls das Granulat des Schlagzähmodifikators (B) und gegebenenfalls die Zusatzstoffe (D) in einem geschlossenen Behälter vermischt. Diese Mischung wird mittels eines Taumelmischers, Rhönradmischers oder Taumeltrockners 10 bis 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 260 bis 340 °C, wobei die Temperatur des ersten Zylinders auf 50 bis 100 °C eingestellt werden kann. Vor der Düse kann entgast werden. Dies kann mittels Vakuum oder atmosphärisch erfolgen. Die Schmelze wird in Strangform ausgetragen, im Wasserbad bei 10 bis 80 °C abgekühlt und anschließend granuliert. Alternativ kann die Schmelze auch durch eine Lochplatte mit Schneideinrichtung in ein Wasserbad gepresst und die abgeschnittenen Granulate in eine Nachbehandlungsstrecke abgetrennt werden (Unterwassergranulation). Das Granulat wird bei maximal 100 °C unter Stickstoff oder im Vakuum auf einen Wassergehalt von unter 0,1 Gew.-% getrocknet.

Anhand der nachfolgenden Beispiele soll der erfindungsgemäße Gegenstand näher erläutert werden, ohne diesen auf die hier gezeigten spezifischen Ausführungsformen einschränken zu wollen.

### Beispiele und Vergleichsbeispiele

### Ausgangsmaterialien

Die in den Beispielen und Vergleichsbeispielen verwendeten Materialien werden in der Tabelle 1 zusammengefasst.

**Tabelle 1: In den Beispielen und Vergleichsbeispielen verwendete Materialien**

| **Komponenten** | **Beschreibung** | **Hersteller** |
|---|---|---|
| Polyamid 6T/66 (A) | Teilkristallines Polyamid aus 1,6-Hexandiamin (50 Mol-%), Terephthalsäure (26 Mol-%) und 1,6-Hexamdisäure (24 Mol-%) | EMS-CHEMIE AG, Schweiz |
| | RV 1,69 (gemessen mit 0,5 g in 100 ml m-Kresol bei 20 °C) | |
| | Schmelztemperatur 310 °C | |
| | Schmelzwärme 60 J/g | |
| Polyamid 6 | Teilkristallines Polyamid aus ε-Caprolactam | EMS-CHEMIE AG, Schweiz |
| | RV 1,80 (gemessen mit 0,5 g in 100 ml m-Kresol bei 20 °C) | |
| | Schmelztemperatur 222 °C | |
| Polyamid 66 | Teilkristallines Polyamid 66 aus 1,6-Hexandiamin und 1,6-Hexandisäure | RadiciChimica SpA, Italien |
| | RV 1,79 (gemessen mit 0,5 g in 100 ml m-Kresol bei 20 °C) | |
| | Schmelzpunkt 261 °C | |
| | Handelsname: Radipol A45 | |
| Schlagzähmodifikator (B1) | Ethylen-1-Buten-Copolymer mit 50 Gew.-% 1-Buten 1.2 Gew.-% Maleinsäureanhydrid MFR* 1.2 g/10 min bei 230°C und 2,16 kg Handelsname: Tafmer MH5020C | Mitsui Chemicals, Japan |
| Schlagzähmodifikator (B2) | Blend aus Ethylen/Propylen-Copolymer und Ethylen/1-Buten-Copolymer im Gewichtsverhältniss 67 : 33 | Mitsui Chemicals, Japan |
| | 0,6 Gew.-% Maleinsäureanhydrid | |
| | MVR** 1,3 cm³/10min bei 230 °C und 2,16 kg | |
| | Handelsname: Tafmer MC201 | |
| Ferrocen (C) | Bis(η⁵-cyclopentadienyl)eisen, CAS-Nr. 102-54-5 | Innospec Deutschland GmbH, Deutschland |
| | Handelsname: Plutocen F-C | |
| Schwarz-Masterbatch (D1) | Farbruss-Masterbatch auf Polyethylenbasis | BASF Color Solutions, Deutschland |
| | mit 40 Gew.-% Farbruss | |
| | Handelsname: Euthylen Schwarz 00-6005 C4 | |
| Okabest AO 445F (D2) | 4,4'-Bis(phenylisopropyl)diphenylamin | Oka-Tec GmbH, Deutschland |
| | CAS-Nr. 10081-67-1 | |
| KJ : Ca-stearat 98 : 2 Gew.-% (D3) | Mischung aus Kaliumjodid (CAS-Nr. 7681-11-0) und Calciumstearat (CAS-Nr. 1592-23-0) | Liquichem Handelsgesellschaft mbH, Deutschland |
| | im Gewichtsverhältnis 98:2 | |
| | Handelsname: Adnol TS P stab | |
| CuJ (D4) | Kupferjodid, CAS-Nr. 7681-65-4 | Liquichem Handelsgesellschaft mbH, Deutschland |

| | | |
|---|---|---|
| RV relative Viskosität, gemessen an einer Lösung aus 0,5 g Polyamid in 100 ml m-Kresol bei 20 °C * melt flow rate * * melt volume rate | | |

### Herstellung der Polyamid-Formmasse gemäß Beispiel 1

Das getrocknete Granulat des Polyamids (A) der Schlagzähmodifikator (B1), das Ferrocen (C) und der Zusatzstoff (D1) wurden zu einem Dryblend vermischt, und zwar in dem in der Tabelle 2 angegebenen Verhältnis. Diese Mischung wurde mittels eines Taumelmischers ca. 20 Minuten lang homogenisiert.

Die Polyamid-Formmasse wurde auf einem Zweiwellenextruder der Firma Werner & Pfleiderer Typ ZSK 25 hergestellt. Das Dryblend wurde dabei über eine Dosierwaage in den Einzug dosiert.

Die Temperatur des ersten Gehäuses wurde auf 50 °C eingestellt, diejenige der restlichen Gehäuse auf 260 bis 330 °C. Es wurde eine Drehzahl von 200 U/min und ein Durchsatz von 13 kg/h verwendet. Es wurde nicht entgast. Der Schmelzestrang wurde im Wasserbad abgekühlt, geschnitten und das erhaltene Granulat bei 100 °C für 24 h im Vakuum (30 mbar) auf einen Wassergehalt von unter 0,1 Gew.-% getrocknet.

In den folgenden Tabellen 2 bis 4 werden die Resultate der Beispiele und Vergleichsbeispiele gemäß vorliegender Erfindung zusammengefasst.

**Tabelle 2: Reissfestigkeit in MPa und in % des Ausgangswertes**

| | **Einheit** | **Beispiele** | | | | **Vergleichsbeispiel** | |
|---|---|---|---|---|---|---|---|
| | | **1** | | **2** | | **3** | |
| **PA 6T/66 (A)** | Gew.-% | 79.0 | | 74.0 | | 34.45 | |
| **PA 6** | Gew.-% | - | | - | | 10.0 | |
| **PA 66** | Gew.-% | - | | - | | 34.45 | |
| **Schlagzähmodifikator (B1)** | Gew.-% | 18.0 | | - | | 18.0 | |
| **Schlagzähmodifikator (B2)** | Gew.-% | - | | 23.0 | | - | |
| **KJ : Ca-stearat** | Gew.-% | - | | - | | 0.5 | |
| **98 : 2 Gew.-% (D3)** | | | | | | | |
| **CuJ (D4)** | Gew.-% | - | | - | | 0.1 | |
| **Okabest AO 445F (D2)** | Gew.-% | - | | - | | 0.5 | |
| **Ferrocen (C)** | Gew.-% | 1.0 | | 1.0 | | - | |
| **Schwarz-Masterbatch (D1)** | Gew.-% | 2.0 | | 2.0 | | 2.0 | |

| **Lagerungsdauer** | | **Reissfestigkeit** | | | | | |
|---|---|---|---|---|---|---|---|
| | - | MPa | % | MPa | % | MPa | % |
| 0 | h | 49 | 100 | 44 | 100 | 43 | 100 |

| | | **Lagerungstemperatur 180 °C** | | | | | |
|---|---|---|---|---|---|---|---|
| 504 | h | 48 | 98 | 43 | 98 | 42 | 98 |
| 1008 | h | 46 | 94 | 42 | 95 | 38 | 88 |
| 1512 | h | 45 | 92 | 41 | 93 | 32 | 74 |
| 2016 | h | 45 | 92 | 38 | 86 | 26 | 60 |

**Tabelle 3: Reissdehnung in %**

| | **Einheit** | **Beispiele** | | **Vergleichsbeispiel** |
|---|---|---|---|---|
| | | **1** | **2** | **3** |
| **PA 6T/66 (A)** | Gew.-% | 79 | 74 | 34.45 |
| **PA 6** | Gew.-% | - | - | 10 |
| **PA 66** | Gew.-% | - | - | 34.45 |
| **Schlagzähmodifikator (B1)** | Gew.-% | 18 | - | 18 |
| **Schlagzähmodifikator (B2)** | Gew.-% | - | 23 | - |
| **KJ : Ca-stearat** | Gew.-% | - | - | 0.5 |
| **98 : 2 Gew.-% (D3)** | | | | |
| **CuJ (D4)** | Gew.-% | - | - | 0.1 |
| **Okabest AO 445F (D2)** | Gew.-% | - | - | 0.5 |
| **Ferrocen (C)** | Gew.-% | 1.0 | 1.0 | - |
| **Schwarz-Masterbatch (D1)** | Gew.-% | 2.0 | 2.0 | 2.0 |

| **Lagerungsdauer** | - | **Reissdehnung** | | |
|---|---|---|---|---|
| | | % | % | % |
| 0 | h | 44 | 33 | 58 |
| | | **Lagerungstemperatur 180 °C** | | |
| 504 | h | 18 | 17 | 5.8 |
| 1008 | h | 23 | 16 | 3.4 |
| 1512 | h | 10 | 11 | 2.0 |
| 2016 | h | 13 | 6.2 | 1.5 |

### Diskussion der Ergebnisse

Die Ergebnisse der Tabellen 2 und 3 zeigen, dass die Polyamid-Formmassen der erfindungsgemässen Beispiele 1 und 2 mit Ferrocen (C) als Stabilisator gegenüber der Polyamid-Formmasse des Vergleichsbeispiels 3, das eine anorganische Stabilisierung aus den Komponenten (D2) und (D3) enthält, nach der Lagerung der aus den Polyamid-Formmassen hergestellten Prüfkörpern bei 180 °C sowohl einen verbesserten Erhalt der Reissfestigkeit als auch der Reissdehnung aufweisen.

## Patentansprüche

1. Polyamid-Formmasse enthaltend oder bestehend aus:
(A) 32 bis 99,99 Gew.-% mindestens ein teilkristallines, teilaromatisches Polyamid, wobei das mindestens eine teilkristalline, teilaromatische Polyamid (A) gebildet ist aus den Monomeren (a1) bis (a2) und gegebenenfalls (a3)und gegebenenfalls (a4):
(a1) mindestens eines Diamins, ausgewählt aus der Gruppe bestehend aus 1,4-Butandiamin, 1,5-Pentandiamin, 1,6-Hexan-diamin, 1,8-Octandiamin, 1,9-Nonandiamin, 1,10-Decan-diamin, 1,12-Dodecandiamin, 2-Methyl-1,5-Pentandiamin, 2-Methyl-1,8-octandiamin, Bis(4-aminocyclohexyl)methan, Bis(4-amino-3-methylcyclohexyl)methan, Bis(4-amino-3,5-dimethylcyclohexyl)methan, Bis(aminomethyl)cyclohexan, Isophorondiamin, m-Xylylendiamin und p-Xylylendiamin, und
(a2) mindestens einer aromatischen Dicarbonsäure, ausgewählt aus der Gruppe bestehend aus Terephthalsäure, Isophthal-säure und Naphthalindicarbonsäure, und gegebenenfalls
(a3) mindestens einer Dicarbonsäure, ausgewählt aus der Gruppe bestehend aus 1,6-Hexandisäure, 1,9-Nonandisäure, 1,10-Decandisäure, 1,12-Dodecandisäure, 1,13-Tridecandisäure, 1,14-Tetradecandisäure, 1,15-Pentadecansäure, 1,16-Hexadecandisäure, 1,17-Heptadecandisäure, 1,18-Octadecan-disäure, Cyclohexandicarbonsäure und dimere Fettsäure mit 36 oder 44 C-Atomen, und gegebenenfalls
(a4) einem oder mehreren Lactamen oder ω-Aminosäuren, ausgewählt aus der Gruppe bestehend aus Lactam-6, Lactam-11, Lactam-12, 1,6-Aminohexansäure, 1,11-Aminoundecansäure und 1,12-Aminododecansäure.
(B) 0 bis 30 Gew.-% mindestens einen funktionalisierten Schlagzähmodifikator,
(C) 0,01 bis 3,0 Gew.-% mindestens ein unsubstituiertes oder substituiertes Metallocen,
(D) 0 bis 35 Gew.-% mindestens einen Zusatzstoff,
wobei sich die Komponenten (A) bis (D) auf 100 Gew.-% ergänzen.

2. Polyamid-Formmasse nach Anspruch 1,
**dadurch gekennzeichnet, dass** das mindestens eine teilkristalline, teilaromatische Polyamid (A) mindestens eine der folgenden Eigenschaften aufweist:
• eine relative Viskosität (RV), gemessen nach EN ISO 307 (2007), von 1,45 bis 2,10, bevorzugt von 1,50 bis 1,90, besonders bevorzugt von1,55 bis 1,80,
• eine Schmelzwärme, gemessen nach EN ISO 11357-3 (2013), von mindestens 25 J/g, bevorzugt mindestens 30 J/g, besonders bevorzugt mindestens 35 J/g,
• eine Schmelztemperatur, gemessen nach EN ISO 11357-3 (2013), von mindestens 255 °C, bevorzugt 270 °C bis 350 °C, besonders bevorzugt von 280 bis 340 °C.

3. Polyamid-Formmasse nach einem der Ansprüche 1 oder 2,
**dadurch gekennzeichnet, dass** das mindestens eine teilkristalline, teilaromatische Polyamid (A) ausgewählt aus der Gruppe bestehend aus:
• PA 6T/MPMDT, PA 6T/6I, PA 6T/66, PA 6T/6, PA 6T/12, PA 6T/66/6, PA 6T/6I/6, PA 6T/6I/66, PA 6T/6I/612, PA 9T/MODT, PA 10T, PA 12T, PA 10T/1012, PA 10T/6T, PA 10T/10I, PA 10T/6T/612, PA 10T/6T/10I/6I, PA 10T/6T/1012/612, PA 6T/BACT, PA 6T/BACT/66, PA 6T/BACT/MACMT und PA 6T/BACT/PACMT,
• bevorzugt ausgewählt aus der Gruppe bestehend aus PA 6T/6I, PA 6T/66, PA 6T/66/6, PA 6T/6I/66, PA 6T/6I/612, PA 10T/1012, PA 10T/6T, PA 10T/6T/612, PA 10T/6T/10I/6I, PA 10T/6T/1012/612, PA 6T/BACT und PA 6T/BACT/66.

4. Polyamid-Formmasse nach einem der Ansprüche 1 bis 3,
**dadurch gekennzeichnet, dass** das mindestens eine teilkristalline, teilaromatische Polyamid (A) frei von Lactamen und ω-Aminosäuren ist.

5. Polyamid-Formmasse nach einem der Ansprüche 1 bis 4,
**dadurch gekennzeichnet, dass** das teilkristalline, teilaromatische Polyamid (A) PA 6T/66 ist, gebildet aus:
• 50 Mol-% 1,6-Hexandiamin,
• 14 bis 40 Mol-%, bevorzugt 20 bis 35 Mol-%, besonders bevorzugt 25 bis 30 Mol-% Terephthalsäure, und
• 10 bis 36 Mol-%, bevorzugt 15 bis 30 Mol-%, besonders bevorzugt 20 bis 25 Mol-% 1,6-Hexandisäure.

6. Polyamid-Formmasse nach einem der Ansprüche 1 bis 5,
**dadurch gekennzeichnet, dass** der mindestens eine funktionalisierte Schlagzähmodifikator ausgewählt ist aus der Gruppe bestehend aus
• Polyethylen, Polypropylen, Polyolefin-Copolymeren, Acrylat-Copolymeren, Acrylsäure-Copolymeren, Vinylacetat-Copolymeren, Styrol-Copolymeren, Styrol-Blockcopolymeren, ionischen Ethylen-Copolymeren in denen die Säuregruppen teilweise mit Metallionen neutralisiert sind, Kern-Mantel-Schlagzähmodifikatoren und Mischungen davon,
• bevorzugt ausgewählt ist aus der Gruppe bestehend aus Polyolefin-Copolymeren, Styrol-Copolymeren, Styrol-Blockcopolymeren, Kern-Mantel-Schlagzähmodifikatoren und Mischungen davon,
• besonders bevorzugt ausgewählt ist aus der Gruppe bestehend aus Polyolefin-Copolymeren und Mischungen davon.

7. Polyamid-Formmasse nach Anspruch 6,
**dadurch gekennzeichnet, dass** das mindestens eine Polyolefin-Copolymere ausgewählt ist aus der Gruppe bestehend aus Ethylen-α-Olefin-Copolymeren, Propylen-α-Olefin-Copolymeren, Ethylen-Propylen-Copolymeren, Ethylen-Propylen-Dien-Copolymeren und deren Mischungen, wobei die α-Olefine bevorzugt 3 bis 18 Kohlenstoffatome besitzen.

8. Polyamid-Formmasse nach einem der Ansprüche 1 bis 7,
**dadurch gekennzeichnet, dass** das mindestens eine substitutierte oder unsubstituierte Metallocen eine Schmelztemperatur von 120 °C bis 350 °C , bevorzugt 140 °C bis 320 °C, besonders bevorzugt 150 bis 280 °C besitzt.

9. Polyamid-Formmasse nach einem der Ansprüche 1 bis 8,
**dadurch gekennzeichnet, dass** das mindestens eine substitutierte oder unsubstituierte Metallocen als zentrales Metallatom ein Metall der Gruppe 3 bis 12 oder der Lanthanoiden aufweist, bevorzugt Vanadium, Chrom, Mangan, Eisen, Kobalt, Nickel, Ruthenium, Osmium, Zink, Rhodium, Cadmium, Iridium, Magnesium, Lanthan, Cer, Samarium, Zirkon, Scandium, Yttrium und Kombinationen hiervon, besonders bevorzugt unsubstituierte oder substituierte Bis(η⁵-cyclopentadienyl)eisen, insbesondere ausgewählt aus der Gruppe bestehend aus Ferrocen, 3-Carboxybutyryl-ferrocen, 3-Carboxypropionylferrocen, 6-Mercaptohexylferrocen, Aminomethylferrocene, Dimethylaminomethylferrocen, Diphenylphosphinoferrocen, 1-Ferrocenacrylonitril, 1-Ferrocenylethanol, 1,1'-Bis(1-Hydroxyethyl)ferrocen, 1,1'-Diacetylferrocen, 1,1'-Diamino-ferrocen, 1,1'-Dibenzoylferrocen, 1,1'-Dibutylferrocen, 1,1'-Diethyl-ferrocen, 1,1'-Dihexylferrocen, 1,1'-Dimethylferrocen, 1,1'-Divinyl-ferrocen, 1,1'-Ferrocendicarboxaldehyd, 1,1'-Ferrocendicarboxamid, 1,1'-Ferrocendicarbonsäure, 1,1'-Ferrocendimethanol, 1,1'-Ferrocenyl-essigsäure, 1,1'-Ferrocenylpropansäure, 1,1'-Ferrocenylbutansäure, 1,1'-Ferrocenylpentansäure, 1,2,3,4,5-Pentamethylferrocen, 2-Ferrocenylethanol, 3-Ferrocenylpropanol, 3-Ferrocenylpropansäure, 4-Ferrocenylbutansäure, 5-Ferrocenylpentansäure, Acetylferrocen, α-(N,N-Dimethylamino)ethylferrocen, Aminoferrocen, Ethylferrocen, Ferrocenylessigsäure, Ferrocenylmethanol, Octylferrocen, Ferrocencarbonsäure, Ferrocencarboxamid, Ferrocencarboxaldehyd, Propylferrocen, Hexylferrocen, Hydroxyethylferrocen, Benzoylferrocen, Butylferrocen, Methylferrocen, Vinylferrocen und Bis(pentamethylcyclopentadienyl)eisen(II).

10. Polyamid-Formmasse nach einem der Ansprüche 1 bis 9,
**dadurch gekennzeichnet, dass** der mindestens eine Zusatzstoff ausgewählt ist aus der Gruppe bestehend aus sich von Komponente (C) unterscheidenden anorganischen Stabilisatoren, organischen Stabilisatoren, insbesondere Antioxidantien, Antiozonantien, Lichtschutzmitteln, UV-Stabilisatoren, UV-Absorbern oder UV-Blockern, IR-Absorbern, NIR-Absorbern, Antiblockmitteln, Nukleierungsmitteln, Kristallisationsbeschleunigern, Kristallisationsverzögerern, kettenverlängernden Additiven, Leitfähigkeitsadditiven, Trennmitteln, Gleitmitteln, Farbstoffen, Markierungsmitteln, anorganischen Pigmenten, organischen Pigmenten, Ruß, Graphit, Kohlenstoffnanoröhrchen, Graphen, Titandioxid, Zinksulfid, Zinkoxid, Bariumcarbonat, Bariumsulfat, photochromen Agenzien, Antistatika, Entformungsmitteln, optischen Aufhellern, halogenfreien Flammschutzmitteln, metallischen Pigmenten, Metallflittern, metallbeschichteten Partikeln, teilchenförmigen Füllstoffen und deren Mischungen.

11. Polyamid-Formmasse nach Anspruch 10, **dadurch gekennzeichnet, dass** der mindestens eine teilchenförmige Füllstoff ausgewählt ist aus der Gruppe bestehend aus
• Dolomit, Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Zinkoxid, Zinksulfid, Kreide, Kalk, Kalksteinmehl, Schiefermehl, Feldspat, Bariumcarbonat, Bariumsulfat, synthetischen Schichtsilikaten, natürlichen Schichtsilikaten, permanentmagnetischen oder magnetisierbaren Metallen oder Legierungen, Glasflakes, Glaskugeln, Hohlglaskugeln, hohlkugeligen Silikatfüllstoffen und Mischungen hiervon,
• bevorzugt ausgewählt ist aus der Gruppe bestehend aus Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Kreide, Kalk, Kalksteinmehl, Schiefermehl, Feldspat, Bariumcarbonat, Bariumsulfat, synthetischen Schichtsilikaten, natürlichen Schichtsilikaten, Glasflakes, Glaskugeln, Hohlglaskugeln, hohlkugeligen Silikatfüllstoffen und Mischungen hiervon,
• besonders bevorzugt ausgewählt ist aus der Gruppe bestehend aus Silikaten, Talkum, Glimmer, Kaolin, Titandioxid, gemahlenem oder gefälltem Calciumcarbonat, Kreide, Kalksteinmehl, Schiefermehl, synthetischen Schichtsilikaten, natürlichen Schichtsilikaten, Glasflakes, Glaskugeln, Hohlglaskugeln und Mischungen hiervon.

12. Polyamid-Formmasse nach einem der Ansprüche 1 bis 11,
**dadurch gekennzeichnet, dass** die Polyamid-Formmasse von 43 bis 94,87 Gew.-% der Komponente (A), von 5 bis 25 Gew.-% der Komponente (B), von 0,03 bis 2,0 Gew.-% der Komponente (C) und von 0,1 bis 30 Gew.-% der Komponente (D) enthält oder daraus besteht, insbesondere von 53,5 bis 89,6 Gew.-% der Komponente (A), von 10 bis 20 Gew.-% der Komponente (B), von 0,1 bis 1,5 Gew.-% der Komponente (C) und von 0,3 bis 25 Gew.-% der Komponente (D) enthält oder daraus besteht.

13. Formkörper herstellbar aus einer Polyamid-Formmasse nach einem der Ansprüche 1 bis 12, bevorzugt in Form eines Bauteils aus den Bereichen Automobil, insbesondere im Motorraum, Elektro, Elektronik, Maschinenbau, Energieerzeugung und Energieversorgung, insbesondere Zylinderkopfhauben, Motorabdeckungen, Gehäusen, Befestigungselementen wie Klammern, Haltern, Clipsen, Kabelbindern, Dübeln oder Nieten und Teilen für Ladeluftkühler, Ladeluftkühlerklappen, Ansaugrohren, insbesondere Ansaugkrümmern, Abgasleitungen, Konnektoren, Zahnräder, Lüfterräder, Kühlwasserkästen, Gehäusen oder Teilen von Wärmetauschern, Kühlmittelkühler, Thermostaten, Wasserpumpen, Heizkörpern, Befestigungsteilen, Leiterplatten, Folien, Leitungen, Gehäusen und Teilen von Elektro/Elektronikgeräten, Gehäusen und Teilen von Heizlüftern, Schaltern, Verteilern, Relais, Widerständen, Kondensatoren, Spulen, Lampen, Dioden, LEDs, Transistoren, Konnektoren, Reglern, Speichern und Sensoren.

14. Verwendung einer Polyamid-Formmasse nach einem der Ansprüche 1 bis 13 zur Herstellung von Bauteilen für die Bereiche Automobil, insbesondere im Motorraum, Elektro, Elektronik, Maschinenbau, Energieerzeugung und Energieversorgung, insbesondere Zylinderkopfhauben, Motorabdeckungen, Gehäusen, Befestigungselementen wie Klammern, Haltern, Clipsen, Kabelbindern, Dübeln oder Nieten und Teilen für Ladeluftkühler, Ladeluftkühlerklappen, Ansaugrohren, insbesondere Ansaugkrümmern, Abgasleitungen, Konnektoren, Zahnräder, Lüfterräder, Kühlwasserkästen, Gehäusen oder Teilen von Wärmetauschern, Kühlmittelkühler, Thermostaten, Wasserpumpen, Heizkörpern, Befestigungsteilen, Leiterplatten, Folien, Leitungen, Gehäusen und Teilen von Elektro/Elektronikgeräten, Gehäusen und Teilen von Heizlüftern, Schaltern, Verteilern, Relais, Widerständen, Kondensatoren, Spulen, Lampen, Dioden, LEDs, Transistoren, Konnektoren, Reglern, Speichern und Sensoren.

## Claims

1. A polyamide molding compound comprising or consisting of:
(A) 32 to 99.99 wt% of at least one semi-crystalline, semi-aromatic polyamide, wherein the at least one semi-crystalline, semi-aromatic polyamide (A) is formed from the monomers (a1) to (a2) and, optionally, (a3) and, optionally, (a4):
(a1) at least one diamine selected from the group consisting of 1,4-butanediamine, 1,5-pentanediamine, 1,6-hexanediamine, 1,8-octanediamine, 1,9-nonanediamine, 1,10-decanediamine, 1,12-dodecanediamine, 2-methyl-1,5-pentanediamine, 2-methyl-1,8-octanediamine, bis(4-aminocyclohexyl)methane, bis(4-amino-3-methylcyclohexyl)methane, bis(4-amino-3,5-dimethylcyclohexyl)methane, bis(aminomethyl)cyclohexane, isophorone diamine, m-xylylenediamine and p-xylylenediamine, and
(a2) at least one aromatic dicarboxylic acid selected from the group consisting of terephthalic acid, isophthalic acid, and naphthalene dicarboxylic acid, and optionally
(a3) at least one dicarboxylic acid selected from the group consisting of 1,6-hexanedioic acid, 1,9-nonanedioic acid, 1,10-decanedioic acid, 1,12-dodecanedioic acid, 1,13-tridecanedioic acid, 1,14-tetradecanedioic acid, 1,15-pentadecanoic acid, 1,16-hexadecanedioic acid, 1,17-heptadecanedioic acid, 1,18-octadecanedioic acid, cyclohexanedicarboxylic acid, and dimeric fatty acids having 36 or 44 carbon atoms, and optionally
(a4) one or more lactams or ω-amino acids, selected from the group consisting of lactam 6, lactam 11, lactam 12.1, 6-aminohexanoic acid, 1,11-aminoundecanoic acid, and 1,12-aminododecanoic acid.
(B) 0 to 30 wt% of at least one functionalized impact modifier;
(C) 0.01 to 3.0 wt% of at least one unsubstituted or substituted metallocene;
(D) 0 to 35 wt% of at least one additive,
the components (A) to (D) adding up to 100 wt.%.

2. The polyamide molding compound according to claim 1,
**characterized in that** the at least one semi-crystalline, semi-aromatic polyamide (A) has at least one of the following properties:
• a relative viscosity (RV), as measured according to EN ISO 307 (2007), of 1.45 to 2.10, preferably 1.50 to 1.90, and particularly preferably 1.55 to 1.80;
• a heat of fusion, as measured according to EN ISO 11357-3 (2013), of at least 25 J/g, preferably at least 30 J/g, and particularly preferably at least 35 J/g;
• a melting temperature, as measured according to EN ISO 11357-3 (2013), of at least 255°C, preferably 270°C to 350°C, and particularly preferably of 280 to 340°C.

3. The polyamide molding compound according to any one of claims 1 or 2,
**characterized in that** the at least one semi-crystalline, semi-aromatic polyamide (A) is selected from the group consisting of:
• PA 6T∕MPMDT, PA 6T/6I, PA 6T/66, PA 6T/6, PA 6T/12, PA 6T/66/6, PA 6T/6I/6, PA 6T/6I/66, PA 6T/6I/612, PA 9T/MODT,
• PA 10T, PA 12T, PA 10T/1012, PA 10T/6T, PA 10T/10I, PA 10T/6T/612, PA 10T/6T/10I/6I, PA 10T/6T/1012/612, PA 6T/BACT, PA 6T/BACT/66, PA 6T/BACT/MACMT and PA 6T/BACT/PACMT,
• preferably selected from the group consisting of PA 6T/6I, PA 6T/66, PA 6T/66/6, PA 6T/6I/66, PA 6T/6I/612, PA 10T/1012, PA 10T/6T, PA 10T/6T/612, PA 10T/6T/10I/6I, PA 10T/6T/1012/612, PA 6T/BACT, and PA 6T/BACT/66.

4. The polyamide molding compound according to any one of claims 1 to 3,
**characterized in that** the at least one semi-crystalline, semi-aromatic polyamide (A) is free of lactams and ω-amino acids.

5. The polyamide molding compound according to any one of claims 1 to 4,
**characterized in that** the semi-crystalline, semi-aromatic polyamide (A) is PA 6T/66, formed from:
• 50 mol% 1,6-hexanediamine;
• 14 to 40 mol%, preferably 20 to 35 mol%, and particularly preferably 25 to 30 mol%, terephthalic acid; and
• 10 to 36 mol%, preferably 15 to 30 mol-%, and particularly preferably 20 to 25 mol% 1,6-hexanedioic acid.

6. The polyamide molding compound according to any one of claims 1 to 5,
**characterized in that** the at least one functionalized impact modifier is selected from the group consisting of
• polyethylene, polypropylene, polyolefin copolymers, acrylate copolymers, acrylic acid copolymers, vinyl acetate copolymers, styrene copolymers, styrene block copolymers, ionic ethylene copolymers in which the acid groups are partially neutralized with metal ions, core-shell impact modifiers, and mixtures thereof,
• is preferably selected from the group consisting of polyolefin copolymers, styrene copolymers, styrene block copolymers, core-shell impact modifiers, and mixtures thereof, and
• is particularly preferably selected from the group consisting of polyolefin copolymers and mixtures thereof.

7. The polyamide molding compound according to claim 6,
**characterized in that** the at least one polyolefin copolymer is selected from the group consisting of ethylene-α-olefin copolymers, propylene-α-olefin copolymers, ethylene-propylene copolymers, ethylene-propylene-diene copolymers, and the mixtures thereof, wherein the α-olefins preferably have 3 to 18 carbon atoms.

8. The polyamide molding compound according to any one of claims 1 to 7,
**characterized in that** the at least one substituted or unsubstituted metallocene has a melting temperature of 120°C to 350°C, preferably 140°C to 320°C, and particularly preferably 150 to 280°C.

9. The polyamide molding compound according to any one of claims 1 to 8,
**characterized in that** the at least one substituted or unsubstituted metallocene comprises, as a central metal atom, a metal from group 3 to 12 or the lanthanides, preferably vanadium, chromium, manganese, iron, cobalt, nickel, ruthenium, osmium, zinc, rhodium, cadmium, iridium, magnesium, lanthanum, cerium, samarium, zirconium, scandium, yttrium, and combinations thereof, and particularly preferably unsubstituted or substituted bis(η⁵-cyclopentadienyl)iron compounds, in particular selected from the group consisting of ferrocene, 3-carboxybutyryl-ferrocene, 3-carboxypropionyl-ferrocene, 6-mercaptohexylferrocene, aminomethylferrocene, dimethylaminomethylferrocene, diphenylphosphinoferrocene, 1-ferrocenacrylonitrile, 1-ferrocenylethanol, 1,1'-bis(1-hydroxyethyl)ferrocene, 1,1'-diacetylferrocene, 1,1'-diaminoferrocene, 1,1'-dibenzoylferrocene, 1,1'-dibutylferrocene, 1,1'-diethylferrocene, 1,1'-dihexylferrocene, 1,1'-dimethylferrocene, 1,1'-divinylferrocene, 1,1'-ferrocene dicarboxaldehyde, 1,1'-ferrocene dicarboxamide, 1,1'-ferrocene dicarboxylic acid, 1,1'-ferrocene dimethanol, 1,1'-ferrocenylacetic acid, 1,1'-ferrocenylpropanoic acid, 1,1'-ferrocenylbutanoic acid, 1,1'-ferrocenylpentanoic acid, 1,2,3,4,5-pentamethylferrocene,
2-ferrocenylethanol, 3-ferrocenylpropanol, 3-ferrocenylpropanoic acid, 4-ferrocenylbutanoic acid, 5-ferrocenylpentanoic acid, acetylferrocene,
α-(N,N-dimethylamino)ethylferrocene, aminoferrocene, ethylferrocene,
ferrocenylacetic acid, ferrocenylmethanol, octylferrocene, ferrocene carboxylic acid, ferrocene carboxamide, ferrocene carboxaldehyde, propylferrocene, hexylferrocene, hydroxyethylferrocene, benzoylferrocene,
butylferrocene, methylferrocene, vinylferrocene, and bis(pentamethylcyclopentadienyl)iron(II).

10. The polyamide molding compound according to any one of claims 1 to 9,
**characterized in that** the at least one additive is selected from the group consisting of inorganic stabilizers other than component (C), organic stabilizers, in particular antioxidants, antiozonants, light-protective agents, UV stabilizers, UV absorbers or UV blockers, IR absorbers, NIR absorbers, anti-blocking agents, nucleating agents, crystallization accelerators, crystallization retarders, chain-extending additives, conductivity additives, parting agents, lubricants, dyes, marking agents, inorganic pigments, organic pigments, carbon black, graphite, carbon nanotubes, graphene, titanium dioxide, zinc sulfide, zinc oxide, barium carbonate, barium sulfate, photochromic agents, antistatic agents, release agents, optical brighteners, halogen-free flame retardants, metallic pigments, metal flakes, metal-coated particles, particulate fillers, and the mixtures thereof.

11. The polyamide molding compound according to claim 10, **characterized in that** the at least one particulate filler is selected from the group consisting of
• dolomite, silicates, quartz, talc, mica, kaolin, perlite, silica, precipitated or fumed silica, diatomaceous earth, titanium dioxide, magnesium carbonate, magnesium hydroxide, aluminum hydroxide, ground or precipitated calcium carbonate, zinc oxide, zinc sulfide, chalk, lime, lime stone powder, slate powder, feldspar, barium carbonate, barium sulfate, synthetic phyllosilicates, natural phyllosilicates, permanent magnet or magnetizable metals or alloys, glass flakes, glass spheres, hollow glass spheres, hollow silica sphere fillers, and mixtures thereof;
• preferably is selected from the group consisting of silicates, quartz, talc, mica, kaolin, perlite, silica, precipitated or fumed silica, diatomaceous earth, titanium dioxide, magnesium carbonate, magnesium hydroxide, aluminum hydroxide, ground or precipitated calcium carbonate, chalk, lime, lime stone powder, slate powder, feldspar, barium carbonate, barium sulfate, synthetic phyllosilicates, natural phyllosilicates, glass flakes, glass spheres, hollow glass spheres, hollow silica sphere fillers, and mixtures thereof; and
• particularly preferably is selected from the group consisting of silicates, talc, mica, kaolin, titanium dioxide, ground or precipitated calcium carbonate, chalk, lime stone powder, slate powder, synthetic phyllosilicates, natural phyllosilicates, glass flakes, glass spheres, hollow glass spheres, and mixtures thereof.

12. The polyamide molding compound according to any one of claims 1 to 11,
**characterized in that** the polyamide molding compound comprises from 43 to 94.87 wt% of the component (A), from 5 to 25 wt% of the component (B), from 0.03 to 2.0 wt% of the component (C), and from 0.1 to 30 wt% of the component (D), or consists thereof, and in particular comprises from 53.5 to 89.6 wt% of the component (A), from 10 to 20 wt% of the component (B), 0.1 to 1.5 wt% of the component (C), and from 0.3 to 25 wt% of the component (D) or consists thereof.

13. Molded articles producible from a polyamide molding compound according to any one of claims 1 to 12, preferably in the form of a component for the sectors encompassing automotive, in particular in the engine compartment, electrical, electronics, mechanical engineering, energy generation and energy supply, in particular cylinder head covers, engine covers, housings, fasteners such as clamps, brackets, clips, cable ties, dowels, or rivets, and parts for intercoolers, intercooler flaps, intake pipes, in particular intake manifolds, exhaust pipes, connectors, gears, fan wheels, cooling water tanks, housings or parts of heat exchangers, coolant radiators, thermostats, water pumps, radiators, mounting parts, printed circuit boards, films, cables, housings, and parts of electrical/electronic devices, housings and parts of fan heaters, switches, distribution boards, relays, resistors, capacitors, coils, lamps, diodes, LEDs, transistors, connectors, controllers, storage devices, and sensors.

14. Use of a polyamide molding compound according to any one of claims 1 to 13 for producing components for the sectors encompassing automotive, in particular in the engine compartment, electrical, electronics, mechanical engineering, energy generation and energy supply, in particular cylinder head covers, engine covers, housings, fasteners such as clamps, brackets, clips, cable ties, dowels, or rivets, and parts for intercoolers, intercooler flaps, intake pipes, in particular intake manifolds, exhaust pipes, connectors, gears, fan wheels, cooling water tanks, housings or parts of heat exchangers, coolant radiators, thermostats, water pumps, radiators, mounting parts, printed circuit boards, films, cables, housings, and parts of electrical/electronic devices, housings and parts of fan heaters, switches, distribution boards, relays, resistors, capacitors, coils, lamps, diodes, LEDs, transistors, connectors, controllers, storage devices, and sensors.

## Revendications

1. Masse de moulage en polyamide contenant, ou constituée de :
(A) entre 32 et 99,99 % en poids d'au moins un polyamide semi-cristallin et semi-aromatique, dans lequel le au moins un polyamide semi-cristallin et semi-aromatique (A) est formé à partir des monomères (a1) à (a2), et éventuellement (a3), et éventuellement (a4) :
(a1) au moins une diamine choisie parmi le groupe constitué de la 1,4-butanediamine, de la 1,5-pentanediamine, de la 1,6-hexanediamine, de la 1,8-octanediamine, de la 1,9-nonanediamine, de la 1,10-décanediamine, de la 1,12-dodécanediamine, de la 2-méthyl-1,5-pentanediamine, de la 2-méthyl-1,8-octanediamine, du bis(4-amino-cyclohexyl)méthane, du bis(4-amino-3-méthyl-cyclohexyl)méthane, du bis(4-amino-3,5-diméthyl-cyclohexyl)méthane, du bis(aminométhyl)cyclohexane, de l'isophorone diamine, de la m-xylylènediamine et de la p-xylylènediamine, et
(a2) au moins un acide dicarboxylique aromatique choisi parmi le groupe constitué de l'acide téréphtalique, de l'acide isophtalique et de l'acide naphtalènedicarboxylique, et éventuellement
(a3) au moins un acide dicarboxylique choisi parmi le groupe constitué de l'acide 1,6-hexanedioïque, de l'acide 1,9-nonanedioïque,
de l'acide 1,10-décanedioïque, de l'acide 1,12-dodécanedioïque, de l'acide 1,13-tridécanedioïque, de l'acide 1,14-tétradécanedioïque, de l'acide 1,15-pentadécanoïque, de l'acide 1,16-hexadécanedioïque, de l'acide 1,17-heptadécanedioïque, de l'acide 1,18-octadécanedioïque, de l'acide cyclohexanedicarboxylique et des acides gras dimères comprenant 36 ou 44 atomes de carbone, et éventuellement
(a4) un ou plusieurs lactame(s) ou acide(s) ω-aminés choisi(s) parmi le groupe constitué du lactame-6, du lactame-11, du lactame-12, de l'acide 1,6-aminohexanoïque, de l'acide 1,11-aminoundécanoïque et de l'acide 1,12-aminododécanoïque
(B) entre 0 et 30 % en poids d'au moins un modificateur d'impact fonctionnalisé,
(C) entre 0,01 et 3,0 % en poids d'au moins un métallocène non substitué ou substitué,
(D) entre 0 et 35 % en poids d'au moins un additif,
dans laquelle les composants (A) à (D) se complètent mutuellement jusqu'à obtenir 100 % en poids.

2. Masse de moulage en polyamide selon la revendication 1,
**caractérisée en ce que** le au moins un polyamide semi-cristallin et semi-aromatique (A) présente au moins une des propriétés ci-dessous :
• une viscosité relative (RV), mesurée selon la norme EN ISO 307 (2007), comprise entre 1,45 et 2,10, de manière préférée comprise entre 1,50 et 1,90, de manière particulièrement préférée comprise entre 1,55 et 1,80,
• une chaleur de fusion, mesurée selon la norme EN ISO 11357-3 (2013), d'au moins 25 J/g, de manière préférée d'au moins 30 J/g, et de manière plus particulièrement préférée d'au moins 35 J/g,
• une température de fusion, mesurée selon la norme EN ISO 11357-3 (2013), d'au moins 255°C, de manière préférée comprise entre 270°C et 350°C, et de manière plus particulièrement préférée comprise entre 280°C et 340°C.

3. Masse de moulage en polyamide selon l'une quelconque des revendications 1 ou 2,
**caractérisée en ce que** le moins un polyamide semi-cristallin et semi-aromatique (A) est choisi parmi le groupe constitué de :
• PA 6T∕MPMDT, PA 6T/6I, PA 6T/66, PA 6T/6, PA 6T/12, PA 6T/66/6, PA 6T/6I/6, PA 6T/6I/66, PA 6T/6I/612, PA 9T/MODT,
• PA 10T, PA 12T, PA 10T/1012, PA 10T/6T, PA 10T/10I, PA 10T/6T/612, PA 10T/6T/10I/6I, PA 10T/6T/1012/612, PA 6T∕BACT, PA 6T∕BACT∕66, PA 6T/BACT/MACMT et PA 6T/BACT/PACMT,
• de manière particulièrement préférée choisi parmi le groupe constitué de PA 6T/6I, PA 6T/66, PA 6T/66/6, PA 6T/6I/66, PA 6T/6I/612, PA 10T/1012, PA 10T/6T, PA 10T/6T/612, PA 10T/6T/10I/6I, PA 10T/6T/1012/612, PA 6T/BACT et PA 6T/BACT/66.

4. Masse de moulage en polyamide selon l'une quelconque des revendications 1 à 3,
**caractérisée en ce que** le au moins un polyamide semi-cristallin et semi-aromatique (A) est exempt de lactames et d'acides ω-aminés.

5. Masse de moulage en polyamide selon l'une quelconque des revendications 1 à 4,
**caractérisée en ce que** le polyamide semi-cristallin et semi-aromatique (A) est du PA 6T/66, constitué de :
• 50 % mol de 1,6-hexanediamine,
• entre 14 et 40 % mol, de manière préférée entre 20 et 35 % mol, de manière particulièrement préférée entre 25 et 30 % mol, d'acide téréphtalique, et
• entre 10 et 36 % mol, de manière préférée entre 15 et 30 % mol, de manière particulièrement préférée entre 20 et 25 % mol, d'acide 1,6-hexanedioïque.

6. Masse de moulage en polyamide selon l'une quelconque des revendications 1 à 5,
**caractérisée en ce que** le au moins un modificateur d'impact fonctionnalisé est choisi parmi le groupe constitué
• du polyéthylène, du polypropylène, des copolymères de polyoléfine, des copolymères d'acrylate, des copolymères d'acide acrylique, des copolymères d'acétate de vinyle, des copolymères de styrène, des copolymères séquencés de styrène, des copolymères d'éthylène ioniques au sein desquels les groupes acides sont partiellement neutralisés par des ions métalliques, des modificateurs d'impact cœur-écorce, et de leurs mélanges,
• de manière préférée choisi parmi le groupe constitué des copolymères de polyoléfine, des copolymères de styrène, des copolymères séquencés de styrène, des modificateurs d'impact cœur-écorce, et de leurs mélanges,
• de manière particulièrement préférée choisi parmi le groupe constitué des copolymères de polyoléfines et leurs mélanges.

7. Masse de moulage en polyamide selon la revendication 6,
**caractérisée en ce que** le au moins une copolymère de polyoléfine est choisi parmi le groupe constitué des copolymères d'éthylène-α-oléfine, des copolymères de propylène-α-oléfine, des copolymères d'éthylène-propylène, des copolymères d'éthylène-propylène-diène, et de leurs mélanges, dans laquelle les α-oléfines possèdent de manière préférée entre 3 et 18 atomes de carbone.

8. Masse de moulage en polyamide selon l'une quelconque des revendications 1 à 7,
**caractérisée en ce que** le au moins un métallocène substitué ou non substitué présente une température de fusion comprise entre 120°C et 350°C, de manière préférée comprise entre 140°C et 320°C, de manière particulièrement préférée comprise entre 150°C et 280°C.

9. Masse de moulage en polyamide selon l'une quelconque des revendications 1 à 8,
**caractérisée en ce que** le au moins un métallocène substitué ou non substitué présente en tant qu'atome métallique central un métal des groupes 3 à 12 ou des lanthanides, de manière préférée le vanadium, le chrome, le manganèse, le fer, le cobalt, le nickel, le ruthénium, l'osmium, le zinc, le rhodium, le cadmium, l'iridium, le magnésium, le lanthane, le cérium, le samarium, le zirconium, le scandium, l'yttrium, et leurs combinaisons, de manière particulièrement préférée le bis(η⁵-cyclopentadiényl)fer non substitué ou substitué, en particulier choisi parmi le groupe constitué du ferrocène, du 3-carboxybutyrylferrocène, du 3-carboxypropionylferrocène, du 6-mercaptohexylferrocène, de l'aminométhylferrocène, du diméthylaminométhylferrocène, du diphénylphosphinoferrocène, du 1-ferrocénacrylonitrile, du 1-ferrocényléthanol, du 1,1'-bis(1-hydroxyéthyl)ferrocène, du 1,1'-diacétylferrocène, du 1,1'-diaminoferrocène, du 1,1'-dibenzoylferrocène, du 1,1'-dibutylferrocène, du 1,1'-diéthylferrocène, du 1,1'-dihexylferrocène, du 1,1'-diméthylferrocène, du 1,1'-divinylferrocène, du 1,1'-ferrocènedicarboxaldéhyde, du 1,1'-ferrocènedicarboxamide, de l'acide 1,1'-ferrocènedicarboxylique, du 1,1'-ferrocènediméthanol, de l'acide 1,1'-ferrocénylacétique, de l'acide 1,1'-ferrocénylpropanoïque, de l'acide 1,1'-ferrocénylbutanoïque, de l'acide 1,1'-ferrocénylpentanoïque, du 1,2,3,4,5-pentaméthylferrocène,
du 2-ferrocényléthanol, du 3-ferrocénylpropanol, de l'acide 3-ferrocénylpropanoïque, de l'acide 4-ferrocénylbutanoïque, de l'acide 5-ferrocénylpentanoïque, de l'acétylferrocène,
du α-(N,N-diméthylamino)éthylferrocène, de l'aminoferrocène, de l'éthylferrocène,
de l'acide ferrocénylacétique, du ferrocénylméthanol, de l'octylferrocène, de l'acide ferrocènecarboxylique, du ferrocènecarboxamide, du ferrocènecarboxaldéhyde, du propylferrocène, de l'hexylferrocène, de l'hydroxyéthylferrocène, du benzoylferrocène,
du butylferrocène, du méthylferrocène, du vinylferrocène et du bis(pentaméthyl-cyclopentadiényl)fer(II).

10. Masse de moulage en polyamide selon l'une quelconque des revendications 1 à 9,
**caractérisée en ce que** le au moins un additif est choisi parmi le groupe constitué des stabilisants inorganiques, des stabilisants organiques, en particulier des antioxydants, des antiozonants, des agent de protection contre la lumière, des stabilisants UV, des absorbeurs ou bloqueurs d'UV, des absorbeurs d'IR, des absorbeurs de NIR, des agents anti-agglutinants, des agents de nucléation, des accélérateurs de cristallisation, des retardateurs de cristallisation, des additifs d'allongement de chaîne, des additifs de conductivité, des agents de démoulage, des lubrifiants, des colorants, des agents de marquage, des pigments inorganiques, des pigments organiques, du noir de carbone, du graphite, des nanotubes de carbone, du graphène, du dioxyde de titane, du sulfure de zinc, de l'oxyde de zinc, du carbonate de baryum, du sulfate de baryum, des agents photochromiques, des agents antistatiques, des agents de démoulage, des azurants optiques, des retardateurs de flamme exempts d'halogène, des pigments métalliques, des paillettes métalliques, des particules enrobées de métal, des charges particulaires et de leurs mélanges, qui diffèrent du composant (C).

11. Masse de moulage en polyamide selon la revendication 10, **caractérisée en ce que** la au moins une charge particulaire est choisie parmi le groupe constitué
• de la dolomite, des silicates, du quartz, du talc, du mica, du kaolin, de la perlite, de la silice, des silices précipitées ou pyrogénées, de la terre de diatomées, du dioxyde de titane, du carbonate de magnésium, de l'hydroxyde de magnésium, de l'hydroxyde d'aluminium, du carbonate de calcium broyé ou précipité, de l'oxyde de zinc, du sulfure de zinc, de la craie, de la chaux, de la farine de calcaire, de la farine d'ardoise, du feldspath, du carbonate de baryum, du sulfate de baryum, des phyllosilicates synthétiques, des phyllosilicates naturels, des métaux ou alliages magnétiques permanents ou magnétisables, des flocons de verre, des billes de verre, des billes de verre creuses, des charges de silicate sphériques creuses, et de leurs mélanges,
• de manière préférée choisie parmi le groupe constitué des silicates, du quartz, du talc, du mica, du kaolin, de la perlite, de la silice, des silices précipitées ou pyrogénées, de la terre de diatomées, du dioxyde de titane, du carbonate de magnésium, de l'hydroxyde de magnésium, de l'hydroxyde d'aluminium, du carbonate de calcium broyé ou précipité, de la craie, de la chaux, de la farine de calcaire, de la farine d'ardoise, du feldspath, du carbonate de baryum, du sulfate de baryum, des phyllosilicates synthétiques, des phyllosilicates naturels, des flocons de verre, des billes de verre, des billes de verre creuses, des charges de silicate sphériques creuses, et de leurs mélanges,
• de manière particulièrement préférée choisie parmi le groupe constitué des silicates, du talc, du mica, du kaolin, du dioxyde de titane, du carbonate de calcium broyé ou précipité, de la craie, de la farine de calcaire, de la farine d'ardoise, des phyllosilicates synthétiques, des phyllosilicates naturels, des flocons de verre, des billes de verre, des billes de verre creuses, et de leurs mélanges.

12. Masse de moulage en polyamide selon l'une quelconque des revendications 1 à 11,
**caractérisée en ce que** la masse de moulage en polyamide contient, ou est constituée de, entre 43 et 94,87 % en poids du composant (A), entre 5 et 25 % en poids du composant (B), entre 0,03 et 2,0 % en poids du composant (C) et entre 0,1 et 30 % en poids du composant (D), en particulier entre 53,5 et 89,6 % en poids du composant (A), entre 10 et 20 % en poids du composant (B), entre 0,1 et 1,5 % en poids du composant (C) et entre 0,3 et 25 % en poids du composant (D).

13. Corps moulé pouvant être produit à partir d'une masse de moulage en polyamide selon l'une quelconque des revendications 1 à 12, de manière préférée sous la forme d'un composant relevant des domaines de l'automobile, en particulier pour le compartiment moteur, l'électrotechnique, l'électronique, la mécanique, la production et la distribution d'énergie, en particulier des couvre-culasses, des cache-culbuteurs, des carters, des éléments de fixation tels que colliers, supports, clips, attaches de câble, goujons ou rivets, et des pièces pour des refroidisseurs d'air de suralimentation, des volets de refroidisseur d'air de suralimentation, des tuyaux d'admission, en particulier des collecteurs d'admission, des conduites d'échappement, des connecteurs, des engrenages, des roues de ventilateur, des réservoirs de liquide de refroidissement, des carters ou des pièces d'échangeurs de chaleur, des radiateurs de liquide de refroidissement, des thermostats, des pompes à eau, des radiateurs de chauffage, des pièces de fixation, des circuits imprimés, des films, des câbles, des carters et des pièces d'appareils électriques/électroniques, des carters et des pièces de chauffages soufflants, des interrupteurs, des répartiteurs, des relais, des résistances, des condensateurs, des bobines, des lampes, des diodes, des LED, des transistors, des connecteurs, des régulateurs, des accumulateurs et des capteurs.

14. Utilisation d'une masse de moulage en polyamide selon l'une quelconque des revendications 1 à 13 afin de produire des composants pour les domaines de l'automobile, en particulier pour le compartiment moteur, l'électrotechnique, l'électronique, la mécanique, la production et la distribution d'énergie, en particulier des couvre-culasses, des cache-culbuteurs, des carters, des éléments de fixation tels que colliers, supports, clips, attaches de câble, goujons ou rivets, et des pièces pour des refroidisseurs d'air de suralimentation, des volets de refroidisseur d'air de suralimentation, des tuyaux d'admission, en particulier des collecteurs d'admission, des conduites d'échappement, des connecteurs, des engrenages, des roues de ventilateur, des réservoirs de liquide de refroidissement, des carters ou des pièces d'échangeurs de chaleur, des radiateurs de liquide de refroidissement, des thermostats, des pompes à eau, des radiateurs de chauffage, des pièces de fixation, des circuits imprimés, des films, des câbles, des carters et des pièces d'appareils électriques/électroniques, des carters et des pièces de chauffages soufflants, des interrupteurs, des répartiteurs, des relais, des résistances, des condensateurs, des bobines, des lampes, des diodes, des LED, des transistors, des connecteurs, des régulateurs, des accumulateurs et des capteurs.
